# EUROPEAN PATENT SPECIFICATION

(11) **EP 3 950 608 B1**
(45) Date of publication and mention of the grant of the patent: **05.03.2025**
(21) Application number: 20783980.4
(22) Date of filing: 23.03.2020
(51) Int. Cl.: C03B 5/42, C03B 5/43, F27D 1/00, F27D 1/04

(54) **CROWN STRUCTURE AND PRODUCTION METHOD THEREFOR**
KRONENSTRUKTUR UND HERSTELLUNGSVERFAHREN DAFÜR
STRUCTURE DE COURONNE ET SON PROCÉDÉ DE FABRICATION

(30) Priority: 29.03.2019 JP 2019066369
(43) Date of publication of application: 09.02.2022
(73) Proprietor: AGC Ceramics Co., Ltd., Tokyo 108-0014 (JP)
(72) Inventor: ONO, Yasushi, Tokyo 108-0014 (JP); KOBAYASHI, Ritsuo, Tokyo 108-0014 (JP)
(74) Representative: Müller-Boré & Partner Patentanwälte PartG mbB
(86) International application number: PCT/JP2020/012796
(87) International publication number: WO 2020/203426

(56) References cited:
- EP-A1- 2 857 363
- WO-A1-02/08128
- WO-A1-2013/179409
- JP-A- 2003 261 335
- JP-A- 2017 007 916
- US-A- 1 733 664
- US-A- 2 961 978
- US-B2- 8 268 742

## Description

### TECHNICAL FIELD

The present invention relates to a crown structure used for a glass melting furnace and so on, and a method for manufacturing the same. Particularly, it relates to a vault-shaped crown structure suitable for a glass melting furnace using air combustion, and a method for manufacturing the same.

### BACKGROUND ART

In a glass melting furnace using air combustion, the inside of the furnace becomes very high temperature in order to melt glass. A wall, a ceiling, and so on, of the furnace are made up of refractory bricks having resistance in an inner surface of the furnace, and a heat-insulating structure is further provided in an outer layer of the furnace. In this manner, the glass melting furnace is configured not to release heat inside the furnace to the outside.

For example, there is known a crown structure of a glass melting furnace using air combustion (e.g. see Patent Document 1). In the crown structure, an upper part structure of the glass melting furnace is built into a crown shape from dense silica bricks each of which is formed into a taper shape, silica heat-insulating bricks are connected to one another with silica-based mortar on upper portions of the silica bricks, and further, a heat-insulating layer (such as heat-insulating bricks, ceramic fiber, or the like) is provided on upper portions of the silica heat-insulating bricks by a well-known construction method.

Besides, in recent years, it is desired to reduce an environmental load, and further, a melting temperature tends to increase due to specialization of glass to be melted. Therefore, there is an increasing number of glass melting furnaces each using oxygen combustion with a low environmental load. A flame temperature used in such a glass melting furnace using oxygen combustion is higher than that used in a glass melting furnace using air combustion, and an upper part structure of the glass melting furnace is also exposed to the higher temperature.

In the case of the glass melting furnace using oxygen combustion, a furnace interior temperature becomes high temperature around 1650°C. Therefore, the upper part structure thereof is required to have excellent heat resistance and corrosion resistance. To this end, there is proposed a crown structure in which blocks made of refractory and corrosion-resistant electrocast bricks which include alumina-based composition, alumina-zirconia-silica-based composition, zirconia-based composition, etc. (hereinafter referred to as electrocast brick blocks) are used in place of the silica bricks used in the glass melting furnace using air combustion. Incidentally, a heat-insulating layer in an upper portion of the crown structure using the electrocast brick blocks is required to have lightness in weight and heat insulation as well as the heat resistance and the corrosion resistance.

As the crown structure which is suitable for the glass melting furnace using oxygen combustion, and which has the heat-insulating layer excellent in weight lightness and heat insulation as well as the heat resistance and the corrosion resistance, there is known a crown structure including a corrosion resistant layer which includes a plurality of refractory blocks (electrocast brick blocks) aligned and arranged in a vault shape on a furnace interior side of a glass melting furnace and a lightweight heat-insulating layer which includes a plurality of heat-insulating blocks, a dense monolithic refractory provided so as to cover at least joints between the heat-insulating blocks, and a lightweight heat-insulating monolithic refractory laminated on the dense monolithic refractory and provided so as to fill spaces where are formed by the heat-insulating blocks and the dense monolithic refractory (e.g. see Patent Document 2).

In the crown structure, it is preferable that each of the heat-insulating blocks is formed of an alumina-zirconia-based lightweight monolithic refractory, and the dense monolithic refractory is formed of an alumina-based composition including 85 mass% or more of Al₂O₃.

### CITATION LIST

### PATENT LITERATURE

Patent Document 1: WO 02/08128
Patent Document 2: Japanese Patent No. 5851404

### SUMMARY OF INVENTION

### TECHNICAL PROBLEMS

On the other hand, also as for the glass melting furnace using air combustion, energy saving is required in recent years to be further enhanced. There is a problem that refractory ceramic fiber, which has been conventionally used as the heat-insulating layer of the glass melting furnace, is suspected to cause cancer, and has a decrease in heat insulation due to crystallization during medium- to long-term use, and further a decrease in energy saving. An excellent heat-insulating structure is required in place of the refractory ceramic fiber.

Incidentally, in recent years, bio-soluble fiber has been developed and put into practical use in order to avoid the use of the refractory ceramic fiber. However, there is a problem that the bio-soluble fiber is inferior in heat insulation to the refractory ceramic fiber and crystallized easily to thereby cause a decrease in heat insulation, further a decrease in energy saving, etc. It cannot be said that a heat-insulating structure even using the bio-soluble fiber is sufficient.

Moreover, when an attempt is made to apply, for example, the heat-insulating structure of the aforementioned crown structure described in Patent Document 2 (hereinafter, referred to as "oxygen combustion heat-insulating structure") to the crown structure using air combustion, there are still some problems. Therefore, it cannot be always said that such an application is preferable.

That is, in the oxygen combustion heat-insulating structure, large-sized refractory blocks (the electrocast brick blocks) are used as the corrosion resistant layer. On the other hand, in the glass melting furnace using air combustion as described in Patent Document 1, a corrosion resistant layer is usually built by connecting small-sized silica bricks to one another through silica-based mortar, so that joints are formed all over the corrosion resistant layer. Therefore, as in the aforementioned oxygen combustion heat-insulating structure, a plurality of the heat-insulating blocks arranged as an upper layer on the refractory blocks need to be miniaturized accordingly, and the dense monolithic refractory and the lightweight heat-insulating monolithic refractory in the joint portions also need to be divided into small pieces so that they can be constructed everywhere. Therefore, a great deal of labor is required for the construction, and there is a risk that cost is also incurred in manufacturing and construction of the materials. Further, in that case, the joint portions have a very large area. Therefore, there is a possibility that a problem may be incurred in ensuring heat resistance and corrosion resistance, and there is also a possibility that gas leak cannot be sufficiently blocked.

Further, in the crown structure described in Patent Document 2, the refractory and corrosion-resistant electrocast brick blocks such as the alumina-based composition, the alumina-zirconia-silica-based composition, the zirconia-based composition, or the like, are used as the corrosion-resistant layer. Accordingly, normally, such deterioration that the electrocast brick blocks themselves are melted by chemical reaction does not occur.

On the other hand, in the glass melting furnace using air combustion, the dense silica bricks are used as the corrosion resistant layer. A major chemical component of the silica bricks is SiO₂. In the case where as a heat-insulating structure contacting the silica bricks, for example, the heat-insulating blocks formed of an alumina-zirconia-based lightweight heat-insulating monolithic refractory which are suitable for heat-insulating structure according to Patent Document 2 or an alumina-based dense monolithic refractory including 85 mass% or more of Al₂O₃ is used, a low melting point reactant is produced with interposition of another component than SiO₂ such as alumina-based composition, alumina-zirconia-based composition, or the like and further a product caused by glass vapor inside the furnace due to the contact between the heat-insulating blocks or the refractory and the silica bricks. The low melting point reactant may cause deterioration of the silica bricks or deterioration of the joint portions. Therefore, disadvantages are expected such that heat resistance and corrosion resistance cannot be ensured completely, or gas leak cannot be blocked sufficiently.

Therefore, in order to solve the aforementioned problems, an object of the present invention is to provide a crown structure which can serve as a crown structure suitable for a glass melting furnace using air combustion, which can suppress a decrease in heat insulation even during medium- to long-term use, which exerts excellent energy saving, which is extremely easily constructed even when silica bricks are used as a corrosion resistant layer, and which can suppress deterioration of the silica bricks or joint portions to make the long-term use possible.

A crown structure of the present invention includes:
a corrosion resistant layer including a plurality of silica bricks aligned and arranged in a vault shape on a furnace interior side of a glass melting furnace;
a silica-based heat-insulating layer which includes a silica-based sintered body and which is formed on the corrosion resistant layer; and
a lightweight heat-insulating layer which is formed on the silica-based heat-insulating layer and which is constituted by a layer structure of two or more layers;
in which in the lightweight heat-insulating layer, at least one of the layers making contact with the silica-based heat-insulating layer has a layer structure including a plurality of heat-insulating blocks, and a lightweight heat-insulating monolithic refractory provided in joint portions between the heat-insulating blocks.

A method for manufacturing a crown structure of the present invention includes aligning and arranging a plurality of silica bricks in a vault shape on a furnace interior side of a glass melting furnace so as to form a corrosion resistant layer;
forming a silica-based heat-insulating layer, which includes a silica-based sintered body, on the corrosion resistant layer; and
forming a lightweight heat-insulating layer, which is constituted by two or more layers, on the silica-based heat-insulating layer,
in which in the lightweight heat-insulating layer, at least one of the layers making contact with the silica-based heat-insulating layer has a layer structure including a plurality of heat-insulating blocks, and a lightweight heat-insulating monolithic refractory provided in joint portions between the heat-insulating blocks.

In the present description, the lightweight heat-insulating layer is a layer formed to have the lightweight heat-insulating monolithic refractory. Each of the heat-insulating blocks is a precast block obtained by pre-molding a powder composition for a lightweight heat-insulating monolithic refractory. The lightweight heat-insulating monolithic refractory is a monolithic refractory which is lightweight, which is excellent in two characteristics, i.e. heat insulation and heat resistance, and which is obtained by using a powder composition for a cement-based monolithic refractory in which a refractory lightweight aggregate and alumina cement or the like are blended.

In the present description, the term "contact" includes a case of direct contact and a case of close contact. For example, a configuration in the case of close contact includes a case where the lightweight heat-insulating layer and the silica-based heat-insulating layer are laminated on each other through a bonding material such as mortar.

### ADVANTAGEOUS EFFECTS OF INVENTION

According to the crown structure and the method for manufacturing the same in the present invention, it is possible to provide a crown structure which can suppress a decrease in heat insulation even during medium- to long-term use in a glass melting furnace, which exerts excellent energy saving, which can be extremely easily constructed even when silica bricks are used as a corrosion resistant layer, and which can suppress deterioration of the silica bricks or joint portions to make the long-term use possible. The crown structure is a crown structure suitable for a glass melting furnace using air combustion.

Further, according to the crown structure and the method for manufacturing the same in the present invention, it is possible to provide a crown structure which is also excellent in weight lightness and heat insulation, and which also attains a gas leak suppressing effect to effectively prevent gas inside the furnace from leaking to the outside.

Further, the lightweight heat-insulating layer used here is configured to have the layer structure which is formed by the heat-insulating blocks and the lightweight heat-insulating monolithic refractory, so that the heat-insulating blocks can be also replaced and repaired by a simple operation.

### BRIEF DESCRIPTION OF DRAWINGS

[FIG. 1A] FIG. 1A is a front view illustrating schematically a configuration of a crown structure according to the present invention.
[FIG. 1B] FIG. 1B is a plan view illustrating schematically the configuration of the crown structure in FIG. 1A.
[FIG. 2A] FIG. 2A is a sectional view in which a top part of a crown structure according to a first embodiment of the present invention is partially shown in an enlarged manner when seen from a longitudinal direction.
[FIG. 2B] FIG. 2B is a sectional view in which the top part of the crown structure in FIG. 2A is partially shown in an enlarged manner when seen from a circumferential direction.
[FIG. 3A] FIG. 3A is a sectional view in which a top part of a crown structure according to a modification of FIG. 2A which is the first embodiment of the present invention is partially shown in an enlarged manner when seen from a longitudinal direction.
[FIG. 3B] FIG. 3B is a sectional view in which a top part of the crown structure according to the modification of FIG. 2B which is the first embodiment of the present invention is partially shown in an enlarged manner when seen from a circumferential direction.
[FIG. 4A] FIG. 4A is a sectional view in which a top part of a crown structure according to another modification of FIG. 2A which is the first embodiment of the present invention is partially shown in an enlarged manner when seen from a longitudinal direction.
[FIG. 4B] FIG. 4B is a sectional view in which a top part of the crown structure according to the other modification of FIG. 2B which is the first embodiment of the present invention is partially shown in an enlarged manner when seen from a circumferential direction.
[FIG. 4C] FIG. 4C is a plan view of the crown structure shown in FIGS. 4A and 4B.
[FIG. 5] FIG. 5 is a plan view illustrating a further modification of the crown structure shown in FIGS. 4A to 4C.
[FIG. 6A] FIG. 6A is a sectional view in which a top part of a crown structure according to a second embodiment of the present invention is partially shown in an enlarged manner when seen from a longitudinal direction.
[FIG. 6B] FIG. 6B is a sectional view in which the top part of the crown structure in FIG. 6A is partially shown in an enlarged manner when seen from a circumferential direction.
[FIG. 7A] FIG. 7A is a sectional view in which a top part of a crown structure according to a modification of the second embodiment of the present invention is partially shown in an enlarged manner when seen from a longitudinal direction.
[FIG. 7B] FIG. 7B is a sectional view in which the top part of the crown structure in FIG. 7A is partially shown in an enlarged manner when seen from a circumferential direction.

### DESCRIPTION OF EMBODIMENTS

Embodiments of a crown structure according to the present invention will be described below with reference to the drawings.

### (First Embodiment)

A crown structure according to a first embodiment includes: a corrosion resistant layer including a plurality of silica bricks aligned and arranged in a vault shape on a furnace interior side of a glass melting furnace; a silica-based heat-insulating layer which has a silica-based sintered body and which is formed on the corrosion resistant layer; and a lightweight heat-insulating layer which is formed on the silica-based heat-insulating layer and which is constituted by a layer structure of two or more layers. In the present embodiment, in the lightweight heat-insulating layer, at least one of the layers making contact with the silica-based heat-insulating layer has a layer structure including heat-insulating blocks and a lightweight heat-insulating monolithic refractory. First, an example in which each of the two layers constituting the lightweight heat-insulating layer has a layer structure including heat-insulating blocks and a lightweight heat-insulating monolithic refractory will be described.

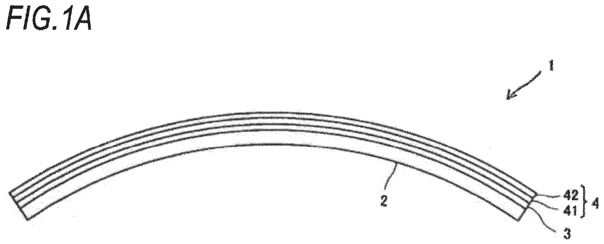

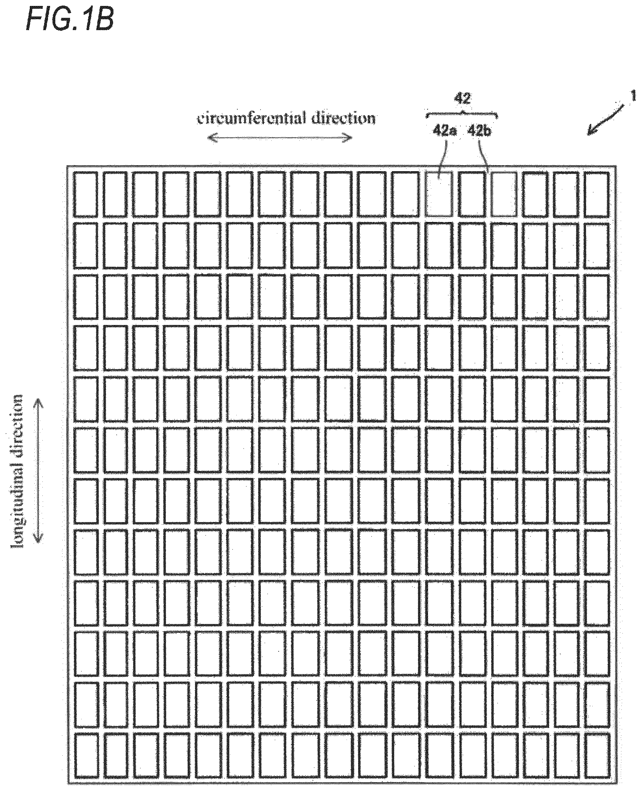

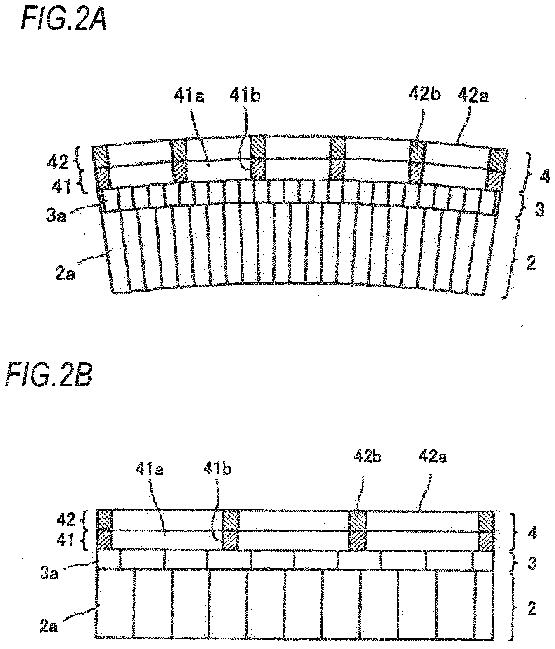

For example, as shown in FIGS. 1A and 1B and FIGS. 2A and 2B, a crown structure 1 constituted by a corrosion resistant layer 2 formed into a vault shape, a silica-based heat-insulating layer 3 provided as an upper layer on the corrosion resistant layer 2, and a lightweight heat-insulating layer 4 provided as an upper layer on the silica-based heat-insulating layer 3 can be illustrated. Here, the lightweight heat-insulating layer 4 has a two-layer structure of a first lightweight heat-insulating layer 41 and a second lightweight heat-insulating layer 42. The first lightweight heat-insulating layer 41 includes first heat-insulating blocks 41a and a first lightweight heat-insulating monolithic refractory 41b. The second lightweight heat-insulating layer 42 includes second heat-insulating blocks 42a and a second lightweight heating-insulating monolithic refractory 42b.

Incidentally, FIG. 1A is a front view schematically showing the configuration of the crown structure according to the present invention, and FIG. 1B is a plan view thereof.

Here, the vault shape means a shape formed by extruding an arch shape in a horizontal direction. In the present description, a direction in which the arch (circular arc) in the vault shape is formed is referred to as circumferential direction, and a direction in which the arch shape is extended in the horizontal direction is referred to as longitudinal direction.

The crown structure according to the present embodiment will be described below with reference to FIGS. 2A and 2B along with FIGS. 1A and 1B. Here, FIG. 2A is a sectional view in which a top part of the crown structure according to the first embodiment of the present invention is partially shown in an enlarged manner when seen from the longitudinal direction, and FIG. 2B is a sectional view in which the top part of the crown structure is partially shown in an enlarged manner when seen from the circumferential direction.

The corrosion resistant layer 2 is a layer in which a plurality of silica bricks 2a is aligned and arranged in the vault shape on a furnace interior side of a glass melting furnace, as shown in FIGS. 2A and 2B. The corrosion resistant layer 2 is a layer having heat resistance and corrosion resistance because it is exposed inside the furnace in use to make contact with a heated object and a volatile matter at a furnace interior temperature. The corrosion resistant layer 2 may be formed in a manner similar to or the same as a corrosion resistant layer of a crown structure in a glass melting furnace for air combustion according to the background art.

Preferably, the silica bricks 2a have heat resistance to the furnace interior temperature of the glass melting furnace, and corrosion resistance to glass vapor generated when the glass is melted. As the silica brick 2a, for example, a dense silica-based sintered body can be used. Preferably, the silica-based sintered body includes 96 mass% or more of silica as a chemical component, and has a bulk specific gravity of 1.85 or more at 110°C.

A height of each silica brick 2a used here is usually preferably 350 mm or more, more preferably in a range of 350 mm to 400 mm. The height of the silica brick 2a serves as a thickness of the corrosion resistant layer 2. The height of the silica brick 2a, together with the material used as the silica brick 2a, determines characteristics such as heat resistance and corrosion resistance of the corrosion resistant layer 2. Further, with regard to a length (width) of the silica brick 2a in the circumferential direction, the silica brick 2a is preferably formed into a taper shape which has a dimension of 75 mm to 85 mm on a furnace exterior side and has a width reduced toward the furnace interior side so that the vault shape can be easily formed by alignment with the other silica bricks 2a. Moreover, a length (depth) of the silica brick 2a in the longitudinal direction is preferably in a range of 150 to 250 mm in terms of easiness of building the corrosion resistant layer 2, etc.

The silica-based heat-insulating layer 3 provided as an upper layer on the corrosion resistant layer 2 is a layer which has heat insulation and which is formed to contain the silica-based sintered body. Since the silica-based heat-insulating layer 3 makes direct contact with the corrosion resistant layer 2, the silica-based heat-insulating layer 3 is required to have high heat resistance and corrosion resistance. In the present embodiment, a case where silica heat-insulating bricks 3a are used as the silica-based sintered body will be described. In the present description, the silica heat-insulating bricks are silica-based heat-insulating bricks used for back-up lining the silica bricks of the glass melting furnace, and mean bricks having high heat resistance and a property of not reacting with the silica bricks even at a high temperature. To produce each of the silica heat-insulating bricks, a lightweight silica-based raw material may be molded and fired, or the silica-based raw material may be mixed with an organic foaming agent such as expanded polystyrene beads or the like, and then molded and fired.

When the silica heat-insulating bricks 3a are used, the silica heat-insulating bricks 3a can be formed into a vault shape like the silica bricks 2a so as to serve as the silica heat-insulating layer 3, for example, as shown in FIGS. 2A to 2B. The silica heat-insulating bricks 3a preferably have heat resistance, corrosion resistance to glass vapor generated from the inside of the furnace, and excellent heat insulation. As each of the silica heat-insulating bricks 3a, for example, a heat-insulating silica-based sintered body can be used, a silica-based sintered body including 90 mass% or more of silica as a chemical component is preferable, and further, a silica-based sintered body having a bulk specific gravity of 1.25 or less at 110°C is more preferable.

Incidentally, in the present description, the bulk specific gravity is a bulk specific gravity measured based on JIS-R-2205.

As each of the silica heat-insulating bricks 3a, typically, a rectangular standard sized brick or the like having a size about 65 mm of width, 114 mm of height, and about 230 mm of depth can be used, and the direction of the brick during furnace construction can be determined appropriately, and can be used, for example, as a height of 65 mm (a circumferential-direction length of 114 mm) or a height of 114 mm (a circumferential-direction length of 65 mm). When such rectangular bricks are used, the silica heat-insulating bricks 3a are stacked in the vault shape. For this reason, gaps are generated between the silica heat-insulating bricks 3a and the silica bricks 2a and between the silica heat-insulating bricks 3a. Therefore, when construction is executed to fill the gaps with a powdery substance such as silica-based mortar (silica mortar) appropriately, occurrence of looseness can be prevented preferably.

In the present embodiment, the heat-insulating silica-based sintered body is provided on the corrosion resistant layer 2. In this manner, most of the materials making contact with the silica bricks 2a of the corrosion resistant layer 2 are the silica heat-insulating bricks 3a. Therefore, the possibility that any other chemical component than SiO₂ makes contact with the silica bricks 2a to cause a reaction is lowered. Thus, deterioration of the silica bricks 2a can be effectively suppressed. Accordingly, the corrosion resistant layer 2 can ensure heat resistance and corrosion resistance even after an operation of melting glass is started. Consequently, stable long-term use can be made possible.

The lightweight heat-insulating layer 4 which is formed on the silica-based heat-insulating layer 3 is configured to have two or more layers each having a layer structure including a plurality of heat-insulating blocks and a lightweight heat-insulating monolithic refractory. A case where the lightweight heat-insulating layer has a two-layer structure of the first lightweight heat-insulating layer 41 and the second lightweight heat-insulating layer 42 will be described by way of example below with reference to FIGS. 2A to 2B. However, the lightweight heat-insulating layer is not limited to the two-layer structure, but may have a structure including three or more layers.

Incidentally, as each of the heat-insulating blocks used here, a block larger in size than the aforementioned silica brick 2a or the aforementioned silica heat-insulating brick 3a, and particularly larger in width than the silica brick 2a or the silica heat-insulating brick 3a in the circumferential direction of the crown structure is preferable. Further, a block larger in length than the silica brick 2a or the silica heat-insulating brick 3a in the longitudinal direction of the crown structure is preferable. In this manner, the number of joints between the heat-insulating blocks is greatly smaller than the number of joints between the bricks, so that deterioration of the joint portions can be suppressed.

Moreover, in the present description, the monolithic refractory means a product obtained by constructing a powder composition for the monolithic refractory. The powder composition for the monolithic refractory is not particularly limited, and a composition including an aggregate, a binding material, and fine refractory powder can be used as a basic composition. The powder composition for the monolithic refractory can be kneaded with water and poured in a manner similar to or the same as concrete, so that a construction body can be built by a simple operation.

Here, the first lightweight heat-insulating layer 41 is a layer which is configured to include the first heat-insulating blocks 41a and the first lightweight heat-insulating monolithic refractory 41b, and which is formed on the furnace interior side of the glass melting furnace. As the first lightweight heat-insulating layer 41, for example, a layer in which a plurality of the first heat-insulating blocks 41a is aligned and arranged to have intervals of a predetermined distance therebetween, and the first lightweight heat-insulating monolithic refractory 41b is constructed in joint portions between the first heat-insulating blocks 41a so as to integrate the first heat-insulating blocks 41a with one another can be used.

The second lightweight heat-insulating layer 42 is a layer which is configured to include the second heat-insulating blocks 42a and the second lightweight heat-insulating monolithic refractory 42b, and which is formed on the furnace exterior side of the glass melting furnace. As the second lightweight heat-insulating layer 42, for example, a layer in which a plurality of the second heat-insulating blocks 42a is aligned and arranged to have intervals of a predetermined distance therebetween, and the second lightweight heat-insulating monolithic refractory 42b is constructed in joint portions between the second heat-insulating blocks 42a so as to integrate the second heat-insulating blocks 42a with one another can be used.

Since the lightweight heat-insulating layer 4 includes the first lightweight heat-insulating layer 41 and the second lightweight heat-insulating layer 42, each of which is integrally formed as described above, the lightweight heat-insulating layer 4 has an excellent heat-insulating effect so as to make it possible to suppress heat from being released to the outside of the glass melting furnace. Therefore, thanks to the lightweight heat-insulating layer 4, energy cost can be reduced so as to contribute to energy saving. Further, since the lightweight heat-insulating layer 4 includes the first lightweight heat-insulating layer 41 and the second lightweight heat-insulating layer 42, each of which is made light in weight, the lightweight heat-insulating layer 4 can be easily constructed without the necessity of increasing the mass of the crown structure and can enhance safety.

Further, since the lightweight heat-insulating layer 4 has a two-layer structure of the first lightweight heat-insulating layer 41 and the second lightweight heat-insulating layer 42, the lightweight heat-insulating layer 4 can be formed into an optimal configuration by adjusting characteristics of the respective layers. That is, thanks to the multiple layers formed in the lightweight heat-insulating layer 4, each of the layers has a temperature distribution so that the layer on the furnace interior side can be designed to be formed of a material high in heat resistance temperature, and the layer on the furnace exterior side can be designed to be formed of a material lower in heat resistance temperature than that for the layer on the furnace interior side. Therefore, an optimum material can be selected in accordance with the temperature distribution for each of the layers and in consideration of other characteristics such as heat resistance, corrosion resistance, and heat insulation. For example, design can be made in such a manner that heat resistance and corrosion resistance are regarded as important on the high temperature side close to the furnace interior temperature around 1550°C, and weight lightness and heat insulation are regarded as important on the low temperature side close to a furnace exterior temperature around 30°C of outside air.

As the first lightweight heat-insulating monolithic refractory 41b forming the first lightweight heat-insulating layer 41, a monolithic refractory which is, for example, formed by blending an undermentioned material with melted alumina-zirconia-based hollow particles, and which has a heat resistance temperature of 1600°C or higher and a bulk specific gravity of 1.0 to 1.25 at 110°C can be illustrated. The first lightweight heat-insulating monolithic refractory 41b has performance comparable to that of any conventionally known dense monolithic refractory or bonding bricks. According to this, the first lightweight heat-insulating monolithic refractory 41b can improve weight lightness and energy saving. A powder composition forming the first lightweight heat-insulating monolithic refractory 41b can also be used as a material forming the first heat-insulating blocks 41a.

As the second lightweight heat-insulating monolithic refractory 42b forming the second lightweight heat-insulating layer 42, a monolithic refractory which is, for example, formed by blending an undermentioned material with alumina-silica-based hollow particles, and which has a heat resistance temperature of 1150°C or higher and a bulk specific gravity of 0.47 to 0.6 at 110°C can be used. The second lightweight heat-insulating monolithic refractory 42b has heat-insulating performance comparable to that of conventionally known ceramic fiber. Heat insulation of the ceramic fiber deteriorates significantly (e.g. by 20% to 30%) over time. On the other hand, when the lightweight heat-insulating monolithic refractory is used, energy saving can be improved accordingly because such deterioration does not occur. The powder composition forming the second lightweight heat-insulating monolithic refractory 42b can also be used as a material forming the second heat-insulating blocks 42a.

The aforementioned relationship can also apply in a similar manner or the same manner when the lightweight heat-insulating layer 4 is constituted by three or more layers. That is, since the layer on the furnace interior side of the glass melting furnace is required to have higher heat resistance than that on the furnace exterior side of the same, it is preferable that the lightweight heat-insulating layer is formed into a laminated structure so as to have higher heat resistance toward the furnace interior side. It will go well if each of the layers in the lightweight heat-insulating layer can ensure the minimum heat resistance required of the layer.

Further, each of the first lightweight heat-insulating layer 41 and the second lightweight heat-insulating layer 42 is integrally formed as described above. Since at least two layers each having such an integrated layer structure are provided, gas (glass vapor, etc.) in the glass melting furnace can be effectively suppressed from leaking to the outside of the furnace. In the present embodiment, each of the corrosion resistant layer 2 and the silica-based heat-insulating layer 3 is constructed by aligning and arranging bricks, and, for example, filling the joints between the bricks with silica mortar or the like. There is a possibility that gas may flow into the joint portions between the bricks, and there is a possibility that gas leak cannot be sufficiently suppressed by merely filling the joint portions with the silica mortar or the like. However, in the present embodiment, the lightweight heat-insulating layer 4 is provided as described above so that an excellent effect of suppressing gas leak is attained. Therefore, thanks to the lightweight heat-insulating layer 4, energy saving is also excellent and an increase in environmental load can be also suppressed.

Each of the first heat-insulating blocks 41a used here is preferably a molded body of a monolithic refractory which has a composition such as an alumina-zirconia-based composition, an alumina-based composition, a zirconia-based composition, an alumina-zirconia-silica-based composition, an alumina-silica-based composition, a mullite-based composition, a silica-based composition, an alumina-zircon-based composition, a zircon-based composition, a chamotte-based composition, a chamotte-zircon-based composition, a molten silica-based composition, or the like, which has heat resistance and corrosion resistance, and which is further excellent in weight lightness and heat insulation, and more preferably a molded body of a monolithic refractory which includes an alumina-zirconia-based composition, an alumina-based composition, an alumina-zirconia-silica-based composition, an alumina-silica-based composition, or a silica-based composition, and which has a bulk specific gravity of 1.2 or less at 110°C. When the first heat-insulating block 41a is the molded body of the monolithic refractory, a thermal conductivity at 1000°C is preferably 0.7 W/(m·K) or less, more preferably 0.6 W/(m·K) or less, and further preferably 0.55 W/(m·K) or less. Here, the molded body of the monolithic refractory in the present description is a product in which a powder composition for a monolithic refractory having a predetermined composition has been pre-molded into a block shape.

Further, in the present specification, measurement of the thermal conductivity refers to a value measured based on JIS R2616.

Incidentally, in the present description, for example, the term "silica-based" is used in a sense that SiO₂ is used as a main component, and other materials such as alumina-zirconia-based composition are also used in a similar sense or the same sense. However, the term "main component" means a component whose content (the total content of Al₂O₃, ZrO₂, and SiO₂ in a case of alumina-zirconia-silica-based composition) is 50 mass% or more when the component is expressed by proportion to the total amount of whole components as 100%. Incidentally, in the present description, the content of any chemical component in the refractory is expressed by proportion to the total amount of the whole components as 100%.

As the alumina-zirconia-based monolithic refractory, for example, a monolithic refractory or the like including 83 mass% of Al₂O₃ and 6 mass% of ZrO₂, and having a bulk specific gravity of 1.0 at 110°C, and a heat resistance temperature of 1600°C can be used. As the alumina-zirconia-silica-based monolithic refractory, for example, a monolithic refractory or the like including 70 mass% of Al₂O₃, 14 mass% of SiO₂, and 4 mass% of ZrO₂, and having a bulk specific gravity of 0.77 at 110°C, and a heat resistance temperature of 1300°C can be used. As the silica-based monolithic refractory, for example, a monolithic refractory or the like including 83 mass% of SiO₂, and having a bulk specific gravity of 1.2 at 110°C and a heat resistance temperature of 1300°C can be used.

Each of the first heat-insulating blocks 41a can be manufactured as a molded body of a predetermined block shape as follows. That is, the aforementioned lightweight heat-insulating monolithic refractory is produced by an ordinary vibration molding method, i.e. is kneaded with water at normal temperature, poured into a mold, molded by vibration, hardened, extracted from the mold, and dried at a temperature of about 110°C so as to form the molded body of the predetermined block shape.

In addition, the first heat-insulating block 41a used here is preferably a sintered body which has a composition such as an alumina-zirconia-based composition, an alumina-based composition, a zirconia-based composition, an alumina-zirconia-silica-based composition, an alumina-silica-based composition, a mullite-based composition, a silica-based composition, an alumina-zircon-based composition, a zircon-based composition, a chamotte-based composition, a chamotte-zircon-based composition, a molten silica-based composition, or the like, which has heat resistance and corrosion resistance, and which is further excellent in weight lightness and heat insulation. When a sintered body high in heat resistance and corrosion resistance is used as the first heat-insulating block 41a, the sintered body may be the sintered body which has a bulk specific gravity of 1.25 or less at 110°C. Particularly preferably the sintered body has a heat resistance temperature of 1500°C or higher. Preferably the sintered body is a silica-based sintered body which contains 91 mass% or more of SiO₂, and which has a bulk specific gravity of 0.5 to 1.25 at 110°C. Incidentally, as long as strength can be secured sufficiently, it is preferable that the bulk specific gravity is lower so that thermal conductivity can be lowered. When the first heat-insulating block 41a is a sintered body, the thermal conductivity at 800°C is preferably 1.1 W/(m·K) or less, more preferably 0.8 W/(m·K) or less, and further preferably 0.6 W/(m·K) or less. Further, when the first heat-insulating block 41a is a sintered body, the thermal conductivity at 1000°C is preferably 1.3 W/(m·K) or less, more preferably 1 W/(m·K) or less, and further preferably 0.6 W/(m·K) or less.

Next, the first lightweight heat-insulating monolithic refractory 41b used here is preferably a monolithic refractory which has a composition such as an alumina-zirconia-based composition, an alumina-based composition, a zirconia-based composition, an alumina-zirconia-silica-based composition, an alumina-silica-based composition, a mullite-based composition, a silica-based composition, an alumina-zircon-based composition, a zircon-based composition, a chamotte-based composition, a chamotte-zircon-based composition, a molten silica-based composition, or the like, which has heat resistance and corrosion resistance, and which is further excellent in weight lightness and heat insulation, and more preferably a monolithic refractory which includes an alumina-zirconia-based composition, an alumina-based composition, an alumina-zirconia-silica-based composition, an alumina-silica-based composition or a silica-based composition, and which has a bulk specific gravity of 1.3 or less at 110°C. As the alumina-zirconia-based monolithic refractory, a monolithic refractory which contains 83 mass% of Al₂O₃ and 6 mass% of ZrO₂, and which has a bulk specific gravity of 1.25 at 110°C and a heat resistance temperature of 1600°C can be suitably used. As the alumina-zirconia-silica-based monolithic refractory, a monolithic refractory which includes 76 mass% of Al₂O₃, 16 mass% of SiO₂, and 3 mass% of ZrO₂, and which has a bulk specific gravity of 1.00 at 110°C and a heat resistance temperature of 1300°C can be suitably used. As the silica-based monolithic refractory, a monolithic refractory which contains 85 mass% of SiO₂, and which has a bulk specific gravity of 1.3 at 110°C and a heat resistance temperature of 1300°C can be suitably used. The thermal conductivity of the first lightweight heat-insulating monolithic refractory 41b at 1000°C is preferably 0.8 W/(m·K) or less, more preferably 0.75 W/(m·K) or less, and further preferably 0.65 W/(m·K) or less.

Since the first lightweight heat-insulating monolithic refractory 41b is formed by troweling, patching construction, or the like, in a cold condition or a hot condition, the first lightweight heat-insulating monolithic refractory 41b is constructed with harder kneading-state than that by a vibration molding method used for an ordinary monolithic refractory. Therefore, the water content in the monolithic refractory becomes lower, and the bulk specific gravity becomes larger.

Each of the second heat-insulating blocks 42a used here is preferably a molded body of a monolithic refractory which has a composition such as an alumina-based composition, an alumina-silica-based composition, a mullite-based composition, a silica-based composition, a chamotte-based composition, a chamotte-zircon-based composition, or the like, and which is excellent in weight lightness and heat insulation, and more preferably a molded body of a monolithic refractory which includes an alumina-silica-based composition, and which has a bulk specific gravity of 0.65 or less at 110°C. In addition, the thermal conductivity of the second heat-insulating block 42a at 1000°C is preferably 0.5 W/(m·K) or less, more preferably 0.4 W/(m·K) or less, and further preferably 0.35 W/(m·K) or less.

As the alumina-silica-based monolithic refractory, a lightweight heat-insulating monolithic refractory which includes 39 mass% of Al₂O₃ and 39 mass% of SiO₂, and which has a bulk specific gravity of 0.47 at 110°C, a heat resistance temperature of 1150°C, and a thermal conductivity of 0.31 W/(m·K) at 1000°C can be suitably used.

Here, the second heat-insulating block 42a can be manufactured as a molded body of a predetermined block shape in a manner similar to or the same as the first heat-insulating block 41a. That is, the lightweight heat-insulating monolithic refractory is produced by an ordinary vibration molding method, i.e. is kneaded with water at normal temperature, then poured into a mold, molded by vibration, hardened, extracted from the mold and dried at a temperature of about 110°C so as to form the molded body of the predetermined block shape.

The second lightweight heat-insulating monolithic refractory 42b is preferably a monolithic refractory which has a composition such as an alumina-based composition, an alumina-silica-based composition, a mullite-based composition, a silica-based composition, a chamotte-based composition, a chamotte-zircon-based composition, or the like, and which is excellent in weight lightness and heat insulation, and more preferably a monolithic refractory which includes an alumina-silica-based composition and which has a bulk specific gravity of 0.65 or less at 110°C. As the alumina-silica-based monolithic refractory, a monolithic refractory which includes 34 mass% of Al₂O₃ and 45 mass% of SiO₂, and which has a bulk specific gravity of 0.39 at 110°C, a heat resistance temperature of 1150°C, and a thermal conductivity of 0.28 W/(m·K) at 1000°C, or a monolithic refractory which contains 39 mass% of Al₂O₃ and 39 mass% of SiO₂, and which has a bulk specific gravity of 0.6 at 110°C, a heat resistance temperature of 1150°C, and a thermal conductivity of 0.33 W/(m·K) at 1000°C can be suitably used. The thermal conductivity of the second lightweight heat-insulating monolithic refractory 42b at 1000°C is preferably 0.4 W/(m·K) or less, more preferably 0.35 W/(m·K) or less, and further preferably 0.3 W/(m·K) or less.

Since the second lightweight heat-insulating monolithic refractory 42b is formed by troweling, patching construction, or the like in a cold condition or a hot condition, the second lightweight heat-insulating monolithic refractory 42b is constructed with harder kneading-state than that by a vibration molding method used for an ordinary monolithic refractory. Therefore, the water content in the monolithic refractory becomes lower, and the bulk specific gravity becomes larger.

Although the configuration of an upper part on the lightweight heat-insulating layer 4 is not particularly limited, for example, it may further have a heat-insulating board. As the heat-insulating board, for example, a calcium silicate board can be used.

### (Method for Manufacturing Crown Structure)

In a method for manufacturing the crown structure in the present embodiment, first, a plurality of silica bricks 2a is aligned and arranged in a vault shape on a furnace interior side of a glass melting furnace to thereby form a corrosion resistant layer 2.

The corrosion resistant layer 2 can be formed by merely aligning and arranging the silica bricks 2a in the vault shape in a manner similar to or the same as the background-art method, for example, as shown in FIGS. 2A and 2B. Incidentally, although the silica bricks 2a may be aligned and arranged as they are, for example, construction may be executed to apply silica mortar to joint portions between the silica bricks 2a so as to prevent the joint portions between the silica bricks 2a from being open. By using the silica mortar in this way, looseness during the construction can be suppressed so that the silica bricks 2a can be bonded to each other.

Then, silica heat-insulating bricks 3a which are silica-based sintered bodies are aligned and arranged in a vault shape on the corrosion resistant layer 2 to thereby form a silica-based heat-insulating layer 3.

The silica-based heat-insulating layer 3 can be formed by merely aligning and arranging the silica heat-insulating bricks 3a in the vault shape in a manner similar to or the same as the background-art method. Incidentally, for example, construction may be executed to fill joint portions between the silica bricks 2a and the silica heat-insulating bricks 3a and joint portions between the silica heat-insulating bricks 3a with silica mortar in powder form so as to prevent these joint portions between the silica bricks 2a and the silica heat-insulating bricks 3a and the joint portions between the silica heat-insulating bricks 3a from being open. By using the silica mortar in this way, looseness during the construction can be suppressed, so that the silica bricks 2a and the silica heat-insulating bricks 3a can be integrated with each other, and the silica heat-insulating bricks 3a can be integrated with each other.

Further, a lightweight heat-insulating layer 4 is formed on the silica-based heat-insulating layer 3. The lightweight heat-insulating layer 4 is constituted by two or more layers each having a layer structure including heat-insulating blocks and a lightweight heat-insulating monolithic refractory.

First, first heat-insulating blocks 41a are built in a circumferential direction in a cold condition. The first heat-insulating blocks 41a are built and fixed at intervals of a predetermined distance by use of a spacer block or the like so that joints are formed between the first heat-insulating blocks 41a. A first lightweight heat-insulating monolithic refractory 41b is constructed in gaps of the joints. After the first lightweight heat-insulating monolithic refractory 41b is hardened, the spacer block is removed so that the first heat-insulating blocks 41a can be fixed by the first lightweight heat-insulating monolithic refractory 41b without dropping off.

Incidentally, although the cold construction has been described above, hot construction may be performed after the glass melting furnace is heated, or the cold construction may be performed on a part while the hot construction may be performed on the rest. The hot construction is preferable particularly in a crown top part (top part) of the crown structure.

Next, second heat-insulating blocks 42a are built in the circumferential direction in a cold condition. The second heat-insulating blocks 42a are built and fixed at intervals of a predetermined distance by use of a spacer block or the like so that joints are formed between the second heat-insulating blocks 42a. A second lightweight heat-insulating monolithic refractory 42b is constructed in gaps of the joints. After the second lightweight heat-insulating monolithic refractory 42b is hardened, the spacer block is removed so that the second heat-insulating blocks 42a can be fixed by the second lightweight heat-insulating monolithic refractory 42b without dropping off.

Incidentally, although the cold construction has been described above, hot construction may be performed after the glass melting furnace is heated, or the cold construction may be performed on a part while the hot construction may be performed on the rest. The hot construction is preferable particularly in the crown top part (top part) of the crown structure.

In a state in which all parts to be subjected to the cold construction have been constructed, the glass melting furnace is heated to a predetermined temperature so that the temperature is stable enough to keep the material sufficiently expanded. Then, in the joints to be subjected to the hot construction in the circumferential direction and the joint portions in a longitudinal direction, the first lightweight heat-insulating monolithic refractory 41b is constructed by hot-troweling and hardened, and then the second lightweight heat-insulating monolithic refractory 42b is constructed thereon by hot-troweling and hardened.

In this way, the crown structure according to the first embodiment can be obtained.

Further, in forming the aforementioned lightweight heat-insulating layer 4, the second heat-insulating blocks 42a may be laminated on the first heat-insulating blocks 41a and integrated therewith to thereby form heat-insulating block laminates.

In this case, each of the heat-insulating block laminates can be obtained as follows. That is, in a manner similar to or the same as the formation of the aforementioned heat-insulating block, first, a lightweight heat-insulating monolithic refractory for forming the first heat-insulating block 41a is molded in a mold by vibration and hardened, and then a lightweight heat-insulating monolithic refractory for forming the second heat-insulating block 42a is molded thereon in the mold by vibration and hardened. Thus, the first heat-insulating block 41a and the second heat-insulating block 42a are laminated and integrated. Next, the laminate is extracted from the mold and dried at a temperature of about 110°C, so that the heat-insulating block laminate which is a laminate of a predetermined block shape can be formed.

The heat-insulating block laminates obtained thus are used to form the lightweight heat-insulating layer 4 on the silica-based heat-insulating layer 3 as follows. That is, first, during building in the circumferential direction in a cold condition, the heat-insulating block laminates are built and fixed at intervals of a predetermined distance by use of a spacer block or the like so that joints are formed between the heat-insulating block laminates. On this occasion, due to the first heat-insulating blocks 41a arranged in predetermined positions, the second heat-insulating blocks 42a are also simultaneously arranged in the predetermined positions, so that joints between the second heat-insulating blocks 42a are also formed.

First, the first lightweight heat-insulating monolithic refractory 41b is constructed in gaps of the joints between the first heat-insulating blocks 41a, and the first lightweight heat-insulating monolithic refractory 41b is hardened. Subsequently, the second lightweight heat-insulating monolithic refractory 42b is constructed in gaps of the joints between the second heat-insulating blocks 42a, and the second lightweight heat-insulating monolithic refractory 42b is hardened. Then, the spacer block is removed so that the heat-insulating block laminates can be fixed by the first lightweight heat-insulating monolithic refractory 41b and the second lightweight heat-insulating monolithic refractory 42b without dropping off.

Then, in the joints to be subjected to hot construction in the circumferential direction and the joint portions in the longitudinal direction, the second lightweight heat-insulating monolithic refractory 42b may be constructed on the first lightweight heat-insulating monolithic refractory 41b by hot-troweling and hardened after the first lightweight heat-insulating monolithic refractory 41b is constructed by hot-troweling and hardened, in a manner similar to or the same as the aforementioned description.

Since the heat-insulating block laminates are formed thus in advance, an operation of building and fixing the heat-insulating block laminates at the intervals of the predetermined distance by use of the spacer block or the like is performed only once. In this manner, all the heat-insulating blocks are arranged in the predetermined positions. Therefore, the lightweight heat-insulating monolithic refractory may be constructed in the joint portions in a manner similar to or the same as the aforementioned operation. The process can be simplified in comparison with a case where the first heat-insulating blocks and the second heat-insulating blocks are built respectively.

### (Modification 1 in First Embodiment)

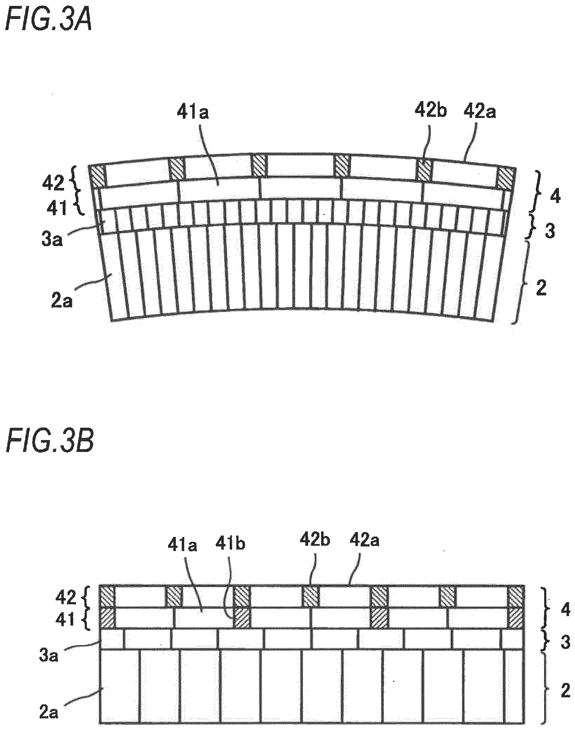

Next, Modification 1 in the aforementioned first embodiment will be described with reference to FIGS. 3A and 3B along with FIGS. 2A and 2B. Here, FIG. 3A is a sectional view in which a top part of a crown structure according to a modification of FIG. 2A which is the first embodiment is partially shown in an enlarged manner when seen from a longitudinal direction. FIG. 3B is a sectional view in which a top part of the crown structure according to the modification of FIG. 2B which is the first embodiment is partially shown in an enlarged manner when seen from a circumferential direction.

In the modification, basically, the structure is similar to or the same as the crown structure described with reference to FIGS. 2A to 2B. The only difference is that the structure in the modification includes portions where some of first heat-insulating blocks 41a constituting a lightweight heat-insulating layer 4 are formed adjacently to each other without interposition of a first lightweight heat-insulating monolithic refractory 41b. That is, a corrosion resistant layer 2 and a silica-based heat-insulating layer 3 will not be described because they are identical to those in the aforementioned description. Hereinafter, only the difference will be described.

In the modification, after a plurality of the first heat-insulating blocks 41a is built closely to each other without interposition of joints in the circumferential direction in a cold condition, as shown in FIG. 3A, second heat-insulating blocks 42a are built and fixed at intervals of a predetermined distance by use of a spacer block or the like, so that joints are formed between the second heat-insulating blocks 42a. Forming a second lightweight heat-insulating monolithic refractory 42b in gaps of the joints may be based on cold construction or hot construction.

That is, to form a first lightweight heat-insulating layer 41, the first heat-insulating blocks 41a are aligned and arranged so that some or all of the first heat-insulating blocks 41a are positioned adjacently to each other without interposition of the first lightweight heat-insulating monolithic refractory 41b in the circumferential direction of the crown structure. Next, to form a second lightweight heat-insulating layer 42, the second heat-insulating blocks 42a are arranged on the first lightweight heat-insulating layer 41 in advance to have intervals of a predetermined distance, and the second lightweight heat-insulating monolithic refractory 42b is constructed in a cold condition and/or a hot condition in the joint portions between the second heat-insulating blocks 42a.

Incidentally, in FIG. 3A, the first heat-insulating blocks 41a and the second heat-insulating blocks 42a are integrated with each other in advance to form heat-insulating block laminates by a method similar to or the same as the aforementioned description. Thus, the first heat-insulating blocks 41a and the second heat-insulating blocks 42a can be simultaneously arranged by one operation. Further, heat-insulating blocks constituting a lightweight heat-insulating layer can be arranged without using a spacer block or the like. Accordingly, for example, a time for arranging the heat-insulating layer is significantly shortened so that the industrial value is great. Incidentally, although no joints are formed between all of the first heat-insulating blocks 41a as illustrated in FIG. 3A, joints may be formed in the circumferential direction between some of the first heat-insulating blocks 41a and the first lightweight heat-insulating monolithic refractory 41b may be formed in the joint portions to integrate the first heat-insulating blocks 41a with each other.

That is, to form the lightweight heat-insulating layer 4, the first heat-insulating blocks 41a and the second heat-insulating blocks 42a are integrated in advance to form heat-insulating block laminates in the circumferential direction of the crown structure. The first heat-insulating blocks 41a of the heat-insulating block laminates are aligned and arranged so that some or all of the first heat-insulating blocks 41a are positioned adjacently to each other without interposition of the first lightweight heat-insulating monolithic refractory 41b. In the case where joint portions are provided between the first heat-insulating blocks 41a, the first lightweight heat-insulating monolithic refractory 41b is constructed in the joint portions in a cold condition and/or a hot condition. Next, the second lightweight heat-insulating monolithic refractory 42b is constructed in some or all of the joint portions between the second heat-insulating blocks 42a in a cold condition and/or a hot condition.

Then, the glass melting furnace is heated to a predetermined temperature. After the heating, in the case where the second lightweight heat-insulating monolithic refractory 42b is unconstructed in some of the joint portions between the second heat-insulating blocks 42a, the second lightweight heat-insulating monolithic refractory 42b is constructed in those joint portions to integrate the second heat-insulating blocks 42a with each other (FIG. 3A).

Further, for example, construction can be performed in the longitudinal direction, as shown in FIG. 2B. That is, after the first lightweight heat-insulating monolithic refractory 41b is constructed in a hot condition and hardened, the second lightweight heat-insulating monolithic refractory 42b is constructed. In this way, the lightweight heat-insulating layer 4 in which the first lightweight heat-insulating layer 41 and the second lightweight heat-insulating layer are integrated with each other is formed.

Further, in another modification as shown in FIG. 3B, after some of the first heat-insulating blocks 41a are built closely to each other without interposition of joints in a cold condition in the longitudinal direction, the first lightweight heat-insulating monolithic refractory 41b may be constructed in the joint portions by hot-troweling and hardened so that the first lightweight heat-insulating layer 41 is completed. Incidentally, an example in which every two first heat-insulating blocks 41a are arranged adjacently to each other, a joint portion is formed for the two first heat-insulating blocks 41a, and the first lightweight heat-insulating monolithic refractory 41b is constructed in the joint portion is shown in FIG. 3B. However, the number of the first heat-insulating blocks 41a arranged adjacently to each other is not limited thereto, but may be three or more. The number of the first heat-insulating blocks 41a arranged adjacently to each other can be appropriately changed according to the block size etc. in use.

Incidentally, in the longitudinal direction shown in FIG. 3B, the size of each brick or block is generally larger than that in the circumferential direction, and thermal expansion of the brick or block is also larger. Accordingly, it is preferable that the joint portions are formed to have a suitable length to prevent occurrence of cracks and the first lightweight heat-insulating monolithic refractory 41b is constructed in the joint portions so that cracks can be prevented from being caused during the heating.

Further, after the second heat-insulating blocks 42a are arranged thereon to have intervals of a predetermined distance in advance, the second lightweight heat-insulating monolithic refractory 42b may be constructed in the joint portions between the second heat-insulating blocks 42a by hot-troweling and hardened, so that the second lightweight heat-insulating layer 42 is completed (FIG. 3B). Here, although the second lightweight heat-insulating monolithic refractory 42b is preferably constructed in a hot condition since the joint portions tend to expand to cause cracks in accordance with expansion of the silica bricks 2a, in order to reduce the influence of the expansion, the second lightweight heat-insulating monolithic refractory 42b, for example for every other joint, may be constructed in a cold condition.

That is, to form the first lightweight heat-insulating layer 41, the first heat-insulating blocks 41a are aligned and arranged so that some of the first heat-insulating blocks 41a are positioned adjacently to each other without interposition of the first heat-insulating monolithic refractory 41b in the longitudinal direction of the crown structure. To form the second lightweight heat-insulating layer 42, the second heat-insulating blocks 42a are arranged in advance on the first lightweight heat-insulating layer 41 to have intervals of a predetermined distance. Further, the first lightweight heat-insulating monolithic refractory 41b is constructed in a hot condition in the joint portions between the first heat-insulating blocks 41a, and the second lightweight heat-insulating monolithic refractory 42b is constructed in a cold condition and/or a hot condition in the joint portions between the second heat-insulating blocks 42a. Thus, the first lightweight heat-insulating layer 41 and the second lightweight heat-insulating layer 42 are integrated with each other, to thereby form the lightweight heat-insulating layer 4.

Incidentally, in FIG. 3B, the first heat-insulating blocks 41a and the second heat-insulating blocks 42a can be integrated with each other in advance to form the heat-insulating block laminates by a method similar to or the same as the aforementioned description. On this occasion, the first heat-insulating blocks 41a of the heat-insulating block laminates are aligned and arranged in advance so that some of the heat-insulating blocks are positioned adjacently to each other without interposition of the first lightweight heat-insulating monolithic refractory 41b. Further, the first lightweight heat-insulating monolithic refractory 41b is constructed in the joint portions between the first heat-insulating blocks 41a in a hot condition, and the second lightweight heat-insulating monolithic refractory 42b is constructed in a cold condition and/or a hot condition in the joint portions between the second heat-insulating blocks 42a. Thus, the first lightweight heat-insulating layer 41 and the second lightweight heat-insulating layer 42 are integrated with each other to form the lightweight heat-insulating layer 4. In this manner, the first heat-insulating blocks 41a and the second heat-insulating blocks 42a can be simultaneously arranged by one operation. Therefore, for example, the time for arranging the heat-insulating layer is significantly shortened so that the industrial value is great.

In execution of FIG. 3B, the heat-insulating blocks in the circumferential direction can be constructed, for example, according to the structure and procedure of FIG. 2A, and can also be constructed according to the structure and procedure of FIG. 3A.

In the case of the aforementioned modification, the first heat-insulating blocks 41a are integrated with each other partially without interposition of joints in the longitudinal direction. When the first heat-insulating blocks 41a are removed in a hot condition during maintenance of the glass melting furnace, the first lightweight heat-insulating monolithic refractory 41b in the joint portions is only partially present. Accordingly, there is an advantage that an area of the dismantling work is limited so that, for example, work of removing and replacing the heat-insulating blocks can be made easily.

Thus, when the first heat-insulating blocks 41a are built in a cold condition, gaps of the joints are formed, and places where the first lightweight heat-insulating monolithic refractory 41b is constructed in the gaps and hardened are limited (for every two first heat-insulating blocks 41a in FIG. 3B). Accordingly, a construction step in the joints (usually, it takes about 20 hours to harden) can be omitted, and the lightweight heat-insulating layer 4 can be therefore formed in a shorter period of time by less labor.

Incidentally, in the case where there is a possibility that gaps are formed in portions of the first heat-insulating blocks 41a around the heating, for example, the gaps are filled with the first lightweight heat-insulating monolithic refractory 41b so that confidentiality can be enhanced.

### (Modification 2 in First Embodiment)

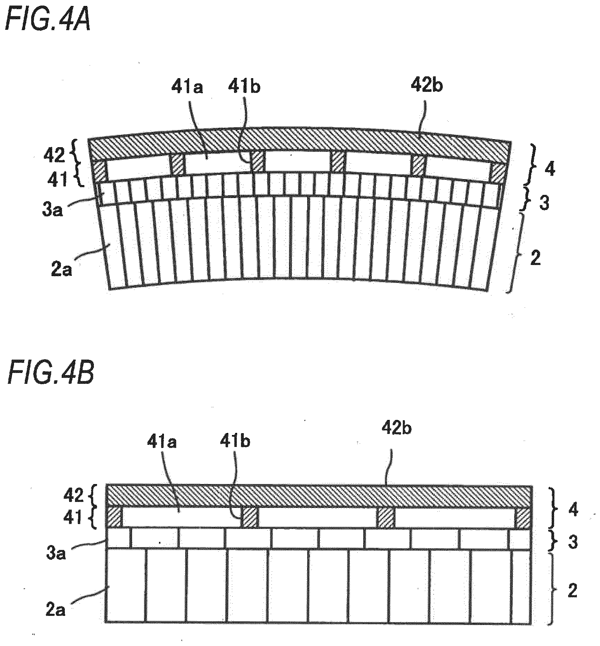

Modification 2 in the aforementioned first embodiment will be described with reference to FIGS. 4A and 4B along with FIGS. 2A and 2B. Here, FIG. 4A is a sectional view in which a top part (i.e. top part in a circumferential direction) of a crown structure according to a modification of FIG. 2A which is the first embodiment is partially shown in an enlarged manner when seen from a longitudinal direction. FIG. 4B is a sectional view in which a top part (i.e. top part in the longitudinal direction) of the crown structure according to the modification of FIG. 2B which is the first embodiment is partially shown in an enlarged manner when seen from the circumferential direction.

In the Modification 2, only a configuration (difference) different from that in the first embodiment will be described. Since the remaining configuration conforms to that in the first embodiment, description thereof will not be described.

In the Modification 2 as shown in FIGS. 4A and 4B, in a lightweight heat-insulating layer 4, a first lightweight heat-insulating layer 41 on a furnace interior side of a glass melting furnace includes a layer structure of first heat-insulating blocks 41a and a first lightweight heat-insulating monolithic refractory 41b, and a second lightweight heat-insulating layer 42 on a furnace exterior side of the glass melting furnace includes only a second lightweight heat-insulating monolithic refractory 42b. Since a corrosion resistant layer 2, a silica-based heat-insulating layer 3, and the first lightweight heat-insulating layer 41 are identical to those in the first embodiment, description thereof will not be described.

The second lightweight heat-insulating layer 42 including only the second lightweight heat-insulating monolithic refractory 42b according to the Modification 2 is, for example, built by the following construction method. That is, the corrosion resistant layer 2 to the first lightweight heat-insulating layer 41 are built by the same operations as those in the method described according to the aforementioned first embodiment. After the glass melting furnace is heated and the first lightweight heat-insulating layer 41 is completely built, the second lightweight heat-insulating monolithic refractory 42b is constructed by hot-troweling.

The second lightweight heat-insulating monolithic refractory 42b is constructed by hot-troweling in the following procedure. That is, first, in a state where the glass melting furnace has been heated and completely expanded, for example, the longitudinal direction of the crown structure is divided into spans each measuring about 1 m to 3 m. Construction is completed on each of spans, and troweling is moved gradually in the longitudinal direction and repeated to complete the span. Normally, when the construction of each of the spans is performed, in a circumferential direction, spans are divided in half and troweled half by half. For example, each span is troweled from a circumferentially lower part toward a ceiling part. In this case, construction is performed so that troweling in a thickness direction is completed at one stroke while being moved in the circumferential direction and the longitudinal direction. Thus, cracks in construction joint portions caused by additional troweling or a decrease in strength is suppressed so that an excellent construction body can be obtained. Furthermore, construction in which a person gets on a material in the middle of the construction can be avoided as much as possible so that damage to the material can be also prevented.

In the aforementioned construction, when the construction is interrupted in the middle, the material temperature rises to harden the lightweight heat-insulating monolithic refractory. Therefore, for example, a partition or the like is provided by bricks so as to provide joints like a grid in a span measuring several meters square, and it is preferable to finish the construction while forming joints linearly. In this way, even if the construction is resumed next time, it is possible to prevent the joint portions from cracking as long as the joints are linear.

Since the second lightweight heat-insulating monolithic refractory 42b is constructed in the state where the glass melting furnace has been heated, there is an advantage that cracks caused by the expansion after the construction hardly occur, in comparison with cold construction.

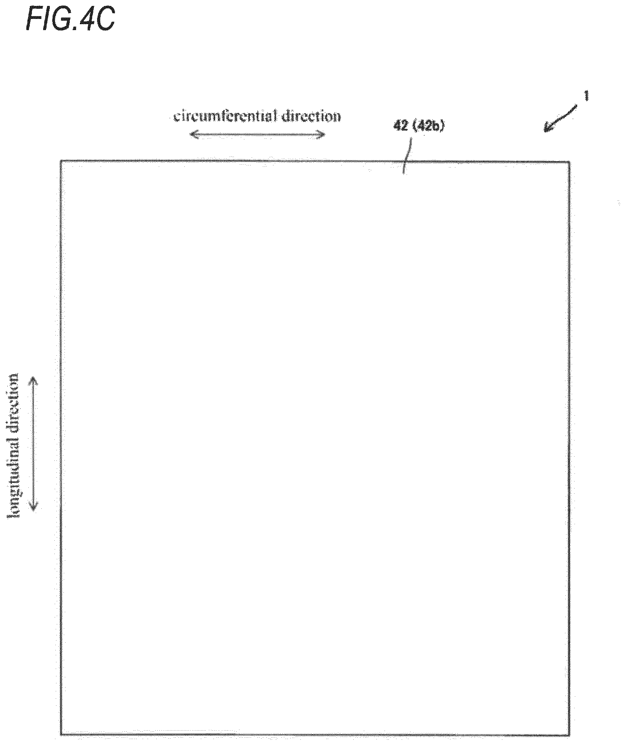

FIG. 4C is a plan view in which the configuration of the crown structure described as the Modification 2 is schematically shown. As shown in FIG. 4C, the second lightweight heat-insulating layer 42 is formed of only the second lightweight heat-insulating monolithic refractory. In this case, the Modification 2 has an advantage that the construction period or cost can be reduced without requiring any labor or preparation for molding second heat-insulating blocks 42a, in comparison with the first embodiment.

As the second lightweight heat-insulating monolithic refractory 42b, the one described in the first embodiment can be preferably used.

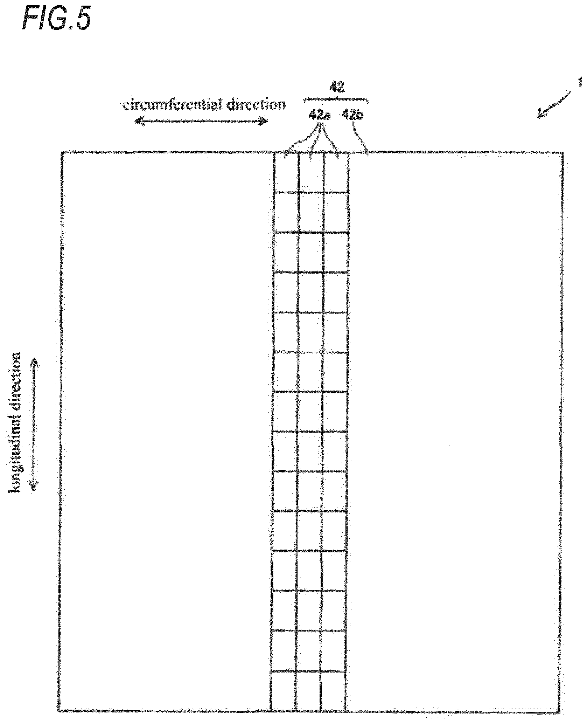

Further, the case where the second lightweight heat-insulating layer 42 is entirely constructed and formed by the second lightweight heat-insulating monolithic refractory 42b has been described in description of the Modification 2 (FIG. 4C). However, second heat-insulating blocks 42a may be provided as a part of the second lightweight heat-insulating layer 42 while a major part of the second lightweight heat-insulating layer 42 is formed of the second lightweight heat-insulating monolithic refractory 42b. For example, as shown in FIG. 5, a case where the second heat-insulating blocks 42a are provided only at a top part can be illustrated. FIG. 5 is a plan view in which the configuration of a crown structure which is a further modification of the crown structure shown in FIGS. 4A to 4C is schematically shown as the Modification 2 of the first embodiment. In FIG. 5, the second heat-insulating blocks 42a are provided adjacently to one another in three rows in the circumferential direction at the top part.

Thus, when the second heat-insulating blocks 42a are provided only in the vicinity of the top part, a construction area of the second lightweight heat-insulating monolithic refractory 42b in the vicinity of the top part is greatly reduced. Accordingly, a workload after the heating can be lightened. Therefore, when any other end portion side than the vicinity of the top part in the circumferential direction is constructed in a cold condition and the vicinity of the top part is constructed in a hot condition, a hot working time high in labor load can be further shortened in addition to the Modification 2.

A construction method for building the second lightweight heat-insulating layer 42 in FIG. 5 will be described. In the construction method of FIG. 5, cold construction and hot construction can be performed in combination. For example, in other than the vicinity of the top part (the part shown by the second heat-insulating blocks 42a in FIG. 5) in the circumferential direction, each span is divided into a grid of squares each measuring about 1 m to 3 m in the circumferential direction and the longitudinal direction. Construction joints each measuring about 100 mm to 200 mm are provided at the divided square portions. Then, a second lightweight heat-insulating monolithic refractory 42b is constructed by the cold construction in the areas other than the vicinity of the top part and the construction joints at the divided square portions of the spans. Next, after the glass melting furnace is heated so that silica bricks are sufficiently expanded, the construction joint portions at the divided square portions in each span are filled with a second lightweight heat-insulating monolithic refractory 42 by hot troweling. Finally, to place the second heat insulating blocks 42a on the vicinity of the top part, construction joints each having a width of about 100 to 200 mm are provided in advance on the second heat-insulating blocks 42a and the second lightweight heat-insulating monolithic refractory 42b which has been formed by cold construction. After the second heat-insulating blocks 42a are placed, the second lightweight heat-insulating monolithic refractory 42b is constructed by hot troweling to completely fill the joints. Thus, the second heat-insulating blocks 42a can be integrated with each other.

Here, the second heat-insulating blocks 42a in FIG. 5 have three rows in the circumferential direction. Since the second heat-insulating blocks 42a in the central row have not been bonded to the second lightweight heat-insulating monolithic refractory 42b, the second heat-insulating blocks 42a in the central row can be easily removed when necessary. After removing the second heat-insulating blocks 42a in the central row, the second heat insulating blocks 42a on the opposite sides of the central row can be easily removed. Normally, before the heat of the glass melting furnace is reduced, removal of the heat-insulating material in the vicinity of the top part is required in order to mitigate the influence of an expansion difference between the silica bricks and the heat-insulating material (silica heat-insulating bricks in the present mode) provided thereon. According to the method of FIG. 5, the heat-insulating material can be easily removed. The second heat-insulating blocks 42a in FIG. 5 preferably have three or more rows in the circumferential direction.

With the configuration shown in FIG. 5, even if there are some expansion cracks in the cold construction part, most of the materials can be constructed in cold working, so that a hot working time with a high labor load can be shortened.

As described above, in the Modification 2 described with reference to FIGS. 4A to 4C or FIG. 5, the configuration of the first lightweight heat-insulating layer can be also formed as the configuration of FIGS. 3A and 3B described as the aforementioned Modification 1.

### (Second Embodiment)

Similarly to the first embodiment, a basic configuration of a crown structure according to a second embodiment includes a corrosion resistant layer in which a plurality of silica bricks is aligned and arranged in a vault shape on a furnace interior side of a glass melting furnace; a silica-based heat-insulating layer which includes a silica-based sintered body and which is formed on the corrosion resistant layer; and a lightweight heat-insulating layer which is formed on the silica-based heat-insulating layer and which is constituted by two or more layers each having a layer structure including heat-insulating blocks and a lightweight heat-insulating monolithic refractory.

Here, the present embodiment is the same as the first embodiment except that the configuration of the silica-based heat-insulating layer 3 in the present embodiment is different from that in the first embodiment. Description about the same configuration will be not described. Hereinafter, the difference will be described below.

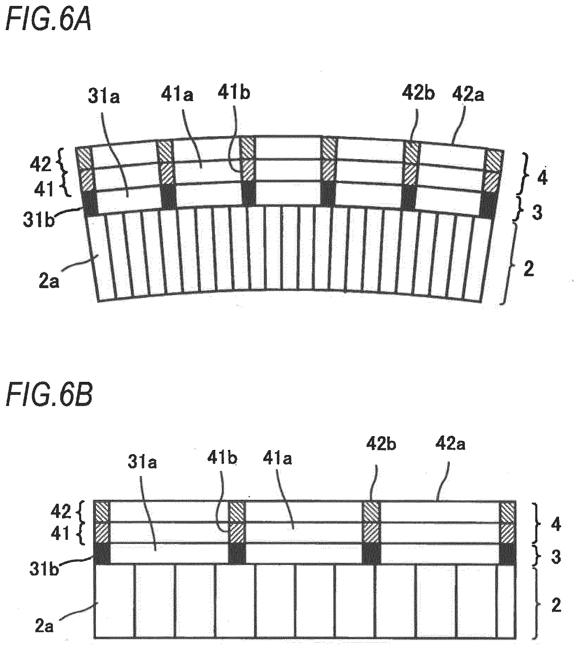

The crown structure according to the present embodiment will be described below with reference to FIGS. 6A and 6B along with FIGS. 1A and 1B. Here, FIG. 6A is a sectional view in which a top part of the crown structure according to the present embodiment is partially shown in an enlarged manner when seen from a longitudinal direction, and FIG. 6B is a sectional view in which the top part of the crown structure is partially shown in an enlarged manner when seen from a circumferential direction.

As described above, the corrosion resistant layer 2 and the lightweight heat-insulating layer 4 are the same as those in the first embodiment. Therefore, description thereof will not be described.

The silica-based heat-insulating layer 3 in the present embodiment is characterized by being configured to have silica-based sintered body blocks 31a and a dense monolithic refractory 31b, as shown in FIGS. 6A and 6B. The dense monolithic refractory is a low cement monolithic refractory in which a refractory aggregate is blended with a small amount of alumina cement and an active ultrafine powder raw material or the like, and preferably a monolithic refractory low in water content and particularly excellent in corrosion resistance or hot strength due to a decrease in a CaO amount.

The silica-based heat-insulating layer 3 is configured to include the silica-based sintered body blocks 31a and the dense monolithic refractory 31b as an upper layer on the silica bricks 2a forming the corrosion resistant layer 2. As the silica-based heat-insulating layer 3, for example, a silica-based heat-insulating layer in which a plurality of the silica-based sintered body blocks 31a is aligned and arranged to have intervals of a predetermined distance from each other, and the dense monolithic refractory 31b is constructed in joint portions between the silica-based sintered body blocks 31a to integrate the silica-based sintered body blocks 31a with each other can be used.

Incidentally, each of the silica-based sintered body blocks 31a used here is preferably a block which is larger in size than the aforementioned silica brick 2a, and which is particularly wider and longer than the silica brick 2a in the circumferential direction and the longitudinal direction of the crown structure.

Here, the silica-based sintered body blocks 31a are integrated with each other by the dense monolithic refractory 31b to form the silica-based heat-insulating layer 3. Since the number of the integrated layer structures is larger than that according to the first embodiment, leak of gas in the furnace can be suppressed more effectively. Accordingly, it is possible to effectively prevent the gas leak, and it is possible to securely prevent heat and the gas component in the furnace from leaking to the outside of the glass melting furnace. Therefore, it is possible to reduce energy cost to contribute to energy saving and it is also possible to suppress an increase in the environmental load.

Each of the silica-based sintered body blocks 31a used here may have a sintered silica-based composition, a molten silica-based composition, or the like, and a silica-based sintered body having a bulk specific gravity of 1.25 or less at 110°C is preferable. In addition, the dense monolithic refractory 31b may have a sintered silica raw material additive, a molten silica raw material additive, or the like, and a silica-based dense monolithic refractory is preferable.

First heat-insulating blocks 41a and second heat-insulating blocks 42a which have been individually molded in advance may be laminated on the silica-based sintered body blocks 31a at the field. In addition, the first heat-insulating blocks 41a may be laminated and integrated on the silica-based sintered body blocks 31a in advance. Moreover, the second heat-insulating blocks 42a may be integrally laminated on the first heat-insulating blocks 41a. Moreover, the first heat-insulating blocks 41a may be laminated on the silica-based sintered body blocks 31a in advance, and the second heat-insulating blocks 42a may be further integrally laminated thereon in advance. Since the blocks are integrally molded in advance in this way, installation construction at the field can be simplified, and interlayer gas leak can be also prevented to thereby result in excellent airtightness preferably.

Each of the silica-based sintered body blocks 31a is a silica-based sintered body including 91 mass% or more of silica as a chemical component. Particularly preferably the silica-based sintered body has a heat resistance temperature of 1500°C or higher, and further preferably has a bulk specific gravity of 0.5 to 1.25 at 110°C. Moreover, as long as the silica-based sintered body block 31a has sufficient strength, it is preferable that the bulk specific gravity is lower to obtain lower thermal conductivity and higher heat insulation.

Further, the silica-based dense monolithic refractory 31b is preferably a monolithic refractory including 99 mass% or more of silica as a chemical component and having a heat resistance temperature of 1550°C or higher.

Here, the silica-based heat-insulating layer 3 is formed as an upper layer on the silica bricks 2a and by the silica-based sintered body blocks 31a whose major chemical component is silica, and the silica-based dense monolithic refractory 31b. Therefore, in a manner similar to or the same as in the first embodiment, deterioration of the silica bricks 2a can be suppressed, heat resistance and corrosion resistance can be ensured even after an operation of melting glass is started, and stable long-term use can be also made possible.

In the second embodiment, differently from the first embodiment, the silica-based heat-insulating layer 3 is formed in such a manner that a plurality of the silica-based sintered body blocks 31a is directly arranged as the upper layer on the silica bricks 2a without arranging a plurality of the silica heat-insulating bricks 3a. Since the silica heat-insulating bricks 3a do not have to be constructed but the silica-based sintered body blocks 31a larger in size than the silica heat-insulating bricks 3a are used instead in the crown structure having this configuration, there is an advantage that the crown structure can be constructed in a shorter period of time and by less labor.

Also in the second embodiment, in a manner similar to or the same as the Modification 1 described in the first embodiment, a part or the whole in the circumferential direction and a part in the longitudinal direction can be formed into a configuration without any joint. Incidentally, in the second embodiment, in the circumferential direction, no joint may be formed between the silica-based sintered body blocks 31a, or no joint may be formed between the silica-based sintered body blocks 31a and between the first heat-insulating blocks 41a. Further, in a manner similar to or the same as the Modification 2 described in the first embodiment, the second lightweight heat-insulating layer 42 can be also formed into the configuration shown in FIG. 4C or FIG. 5A.

The crown structure according to the second embodiment can be manufactured by the same operation as the method for manufacturing the crown structure described according to the first embodiment except for formation of the silica-based heat-insulating layer 3.

Incidentally, formation of the silica-based heat-insulating layer 3 can be also attained by the same operation as formation of the lightweight heat-insulating layer described in the first embodiment, except that the materials to be used are different. That is, when, for example, the first heat-insulating blocks 41a and the first lightweight heat-insulating monolithic refractory 41b in the first embodiment are changed to the silica-based sintered body blocks 31a and the dense monolithic refractory 31b respectively, and a similar operation or the same operation is performed accordingly, the silica-based heat-insulating layer 3 in the present embodiment can be formed.

### (Modification in Second Embodiment)

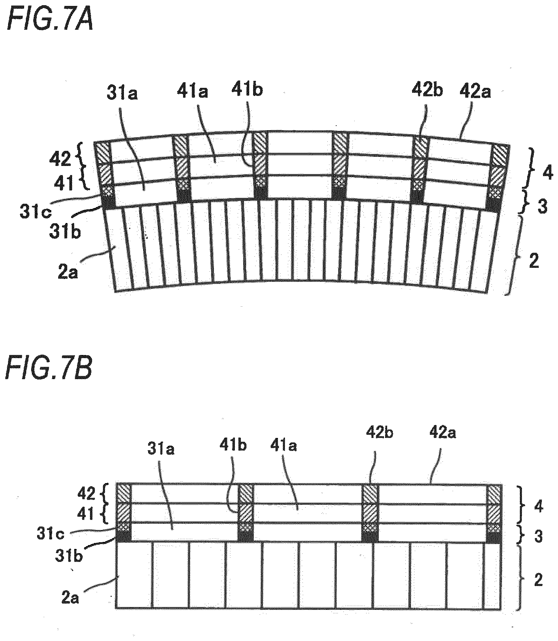

Next, a modification in the aforementioned second embodiment will be described with reference to FIGS. 7A and 7B. Here, FIG. 7A is a sectional view in which a top part of a crown structure according to the modification of the second embodiment is partially shown in an enlarged manner when seen from a longitudinal direction, and FIG. 7B is a sectional view in which the top part of the crown structure is partially shown in an enlarged manner when seen from a circumferential direction.

In the modification, basically, the structure is similar to or the same as the crown structure described in FIGS. 6A and 6B. The only difference is that a monolithic refractory formed between silica-based sintered body blocks 31a of a silica-based heat-insulating layer 3 has a two-layer structure of a dense monolithic refractory 31b and a lightweight heat-insulating monolithic refractory 31c. Here, the dense monolithic refractory 31b is laminated and formed on a furnace interior side, and the lightweight heat-insulating monolithic refractory 31c is laminated and formed on a furnace exterior side.

In the modification, the silica-based sintered body blocks 31a are integrated by the dense monolithic refractory 31b and the lightweight heat-insulating monolithic refractory 31c, to thereby form the silica-based heat-insulating layer 3. The modification is a mode more preferable at a point that heat insulation of joint portions can be improved and the weight can be also reduced, in addition to a point that leak of gas in the furnace can be suppressed more effectively.

A lightweight heat-insulating monolithic refractory described as the aforementioned first lightweight heat-insulating monolithic refractory 41b can be used as the lightweight heat-insulating monolithic refractory 31c used here.

### Examples

The crown structures according to the embodiments of the present invention will be described below by Examples (Examples 1 to 3). Incidentally, the invention of the present application is not limited to these Examples. That is, the invention of the present application is only limited by the appended claims.

### (Example 1)

In a glass melting furnace having a crown structure shown in FIGS. 2A and 2B, the crown structure was formed to have the following sizes.
Furnace Length: approximately 9 m
Furnace Width: approximately 6 m
Crown Radius: 6 m (Furnace Interior Side Radius of Corrosion Resistant Layer 2)
Crown Angle: 60 degrees

First, the corrosion resistant layer 2 was built in such a manner that 87 pieces of silica bricks 2a in a circumferential direction and 39 pieces of the silica bricks 2a in a longitudinal direction were aligned and arranged respectively to form a vault shape on an inner face side of the furnace. Each of the silica bricks 2a used here had a thickness of 375 mm, and construction was executed to apply silica mortar to joint portions between the silica bricks. A brick including 96 mass% of silica as a chemical component and having a bulk specific gravity of 1.85 at 110°C was used as the silica brick 2a.

Next, a silica-based heat-insulating layer 3 was built as an upper layer on the silica bricks 2a in such a manner that a plurality of standard sized (a width of 65 mm, a height of 114 mm and a depth of 230 mm) silica heat-insulating bricks 3a were aligned and arranged into a vault shape where each of the silica heat-insulating bricks 3a was directed to be 114 mm in a thickness direction, 65 mm in the circumferential direction, and 230 mm in the longitudinal direction. Joint portions between the silica heat-insulating bricks were filled with silica mortar in powder form.

Incidentally, a brick including 92 mass% of silica as a chemical component, and having a bulk specific gravity of 1.07 at 110°C, a thermal conductivity of 0.38 W/(m·K) at 350°C, and a heat resistance temperature of 1550°C was used as each of the silica heat-insulating bricks 3a.

Heat-insulating blocks used for a lightweight heat-insulating layer 4 are integrally formed so that thickness of each of first heat-insulating blocks 41a was 110 mm and thickness of each of second heat-insulating blocks 42a was 120 mm. That is, first, a lightweight heat-insulating monolithic refractory for forming the first heat-insulating block 41a is kneaded with water at normal temperature, poured into a mold measuring 297 mm wide by 600 mm deep by 230 mm high, and then molded by vibration and hardened. Next, on upper part the first heat-insulating block 41a, a lightweight heat-insulating monolithic refractory for forming the second heat-insulating block 42a was poured by an operation similar to or the same as the aforementioned operation, molded by vibration, and hardened. Next, the resulting laminate was extracted from the mold and dried at 110°C for 24 hours. Thus, the heat-insulating block laminate in which the first heat-insulating block 41a and the second heat-insulating block 42a were integrally laminated was obtained.

Incidentally, the materials used here were as follows.

A lightweight heat-insulating monolithic refractory including an alumina-zirconia-based composition (Al₂O₃ 83 mass%, ZrO₂ 6 mass%), and having a bulk specific gravity of 1.0 at 110°C, a thermal conductivity of 0.54 W/(m·K) at 1000°C, and a heat resistance temperature of 1600°C was used as the material of the first heat-insulating blocks 41a.

A lightweight heat-insulating monolithic refractory including an alumina-silica-based composition (Al₂O₃ 39 mass%, SiO₂ 39 mass%), and having a bulk specific gravity of 0.47 at 110°C, a thermal conductivity of 0.31 W/(m-K) at 1000°C, and a heat resistance temperature of 1150°C was used as the material of the second heat-insulating blocks 42a.

In a room temperature condition, 13 pieces in the longitudinal direction and 19 pieces in the circumferential direction of the obtained heat-insulating block laminates (each of which measured 297 mm wide by 600 mm deep by 230 mm thick) were aligned and arranged respectively with a gap (joint) of about 75 mm formed between adjacent ones of the heat-insulating block laminates, so that the first heat-insulating blocks 41a made contact with outer surfaces of the silica heat-insulating bricks 3a.

Here, silica-based mortar was laid in powder form in advance in steps or gaps of the outer surfaces of the silica heat-insulating bricks 3a and constructed to be smooth. In addition, the outer surfaces of the silica heat-insulating bricks 3a were assembled to show an approximately circular arc. Accordingly, when each of the heat-insulating block laminates whose bottom was shaped like a flat face was placed on each of the silica heat-insulating bricks 3a, gaps were formed on opposite sides. Therefore, due to the silica-based mortar also laid in powder form to fill the gaps, the heat-insulating block laminates were placed without causing looseness.

Further, in the circumferential direction of the silica heat-insulating bricks 3a in the vault shape, the heat-insulating block laminates were stacked from a lower side toward an upper side (crown top side) while a wooden spacer block whose width corresponds to the joint width was interposed between the blocks. The heat-insulating block laminates in a lowermost part were supported by a furnace exterior structure. Incidentally, the spacer block was removed before heating.

Next, the gaps between the heat-insulating block laminates were filled by the following operation so that the lightweight heat-insulating layer 4 was formed. Incidentally, the materials used here were as follows.

A monolithic refractory including an alumina-zirconia-based composition (Al₂O₃ 83 mass%, ZrO₂ 6 mass%), and having a bulk specific gravity of 1.25 at 110°C, a thermal conductivity of 0.73 W/(m·k) at 1000°C, and a heat resistance temperature of 1600°C was used as the first lightweight heat-insulating monolithic refractory 41b.

A monolithic refractory including an alumina-silica-based composition (Al₂O₃ 34 mass%, SiO₂ 45 mass%), and having a bulk specific gravity of 0.39 at 110°C, a thermal conductivity of 0.28 W/(m·K) at 1000°C, and a heat resistance temperature of 1150°C was used as the second lightweight heat-insulating monolithic refractory 42b.

First, at room temperature, construction at joint portions (joint portions shown in FIG. 2A) in the circumferential direction was performed as follows. The first lightweight heat-insulating monolithic refractory 41b was formed in the gaps between the heat-insulating block laminates in the circumferential direction by troweling to be 110 mm high. Further, after the first lightweight heat-insulating monolithic refractory 41b was hardened, the second lightweight heat-insulating monolithic refractory 42b was formed by troweling for every two second lightweight heat-insulating blocks (every two heat-insulating block laminates) to be 120 mm high. Here, construction at portions where the second lightweight heat-insulating monolithic refractory 42b was unconstructed was performed after the furnace was heated.

Incidentally, portions which were not insulated from heat, such as the gaps (the joint portions shown in FIG. 2B) between the heat-insulating block laminates in the longitudinal direction were protected by heat-insulating fiber or the like during the heating. In such a state, the furnace interior temperature was heated to 1550°C to thermally expand and displace the silica bricks 2a in the corrosion resistant layer 2 and perform hot construction thereon.

Specifically, the first lightweight heat-insulating monolithic refractory 41b was constructed in the gaps between the heat-insulating block laminates in the longitudinal direction by troweling to be 110 mm high, and then hardened. Further, the second lightweight heat-insulating monolithic refractory 42b was constructed on the first lightweight heat-insulating monolithic refractory 41b by troweling to be 120 mm high, and then hardened.

Incidentally, as described above, of the joint portions between the second lightweight heat-insulating blocks, every other joint portion in the circumferential direction had been constructed in a room temperature condition. By a similar operation or the same operation, at the rest joint portions which had not been constructed in the circumferential direction, construction was performed in the hot construction of the second lightweight heat-insulating monolithic refractory 42b.

Further, three heat-insulating block laminates which include the heat-insulating block laminate at a furnace uppermost part (crown top part) and adjacent ones thereto, and the silica heat-insulating bricks 3a as a lower layer on the heat-insulating block laminates were placed after the furnace was heated. The three heat-insulating block laminates which were arranged side by side and adjacently to one another in the circumferential direction were constructed without interposition of joints. Only on opposite sides (opposite ends of the three heat-insulating block laminates arranged side by side), the first lightweight heat-insulating amorphous refractory 41b was constructed in the gaps between the heat-insulating block laminates by troweling to be 110 mm high, and further, the first lightweight heat-insulating monolithic refractory 41b was hardened. Then, the second lightweight heat-insulating monolithic refractory 42b was constructed by troweling to be 120 mm high.

Thus, as a result that the heat-insulating block laminates were placed in a width of about 1 m in the furnace uppermost part after the heating of the furnace, the furnace uppermost part could be constructed after deformation occurred due to differences in expansion among the corrosion resistant layer 2, the silica-based heat-insulating layer 3, and the lightweight heat-insulating layer 4 in the circumferential direction. Accordingly, there is an effect of preventing cracks and the like due to thermal expansion of the lightweight heat-insulating layer 4. Furthermore, to reduce heat of the furnace stopped after a long period of time of operation (usually 5 years or longer), the heat-insulating blocks in the uppermost part are first removed in a heated state (the blocks can be easily removed in this state), and the heat is then reduced. In this manner, it is also possible to prevent cracks and the like due to thermal contraction of the lightweight heat-insulating layer 4 during the reduction of the heat.

In this way, the lightweight heat-insulating layer 4 having a two-layer structure with a thickness of 230 mm was formed as an upper part on the corrosion resistant layer 2 and the silica-based heat-insulating layer 3. Further, a calcium silicate board having a thickness of 50 mm was constructed to be stuck to an upper portion of the lightweight heat-insulating layer 4. Here, a board which included calcium silicate as a main component, and which had a bulk specific gravity of 0.15 at 110°C and a thermal conductivity of 0.11 W/(m·K) at 600°C was used as the calcium silicate board.

Thus, the glass melting furnace having the crown structure in the present embodiment could be manufactured. The obtained glass melting furnace had the ceiling structure excellent in heat resistance and heat insulation. In addition, gas leak could be also effectively prevented. Further, the lightweight heat-insulating layer 4 was a lightweight heat-insulating layer in which the heat-insulating blocks were integrally formed with the monolithic refractories and which did not have any gap or crack even in a high temperature condition.

### (Example 2)

A glass melting furnace having a crown structure according to the present embodiment was formed by an operation similar to or the same as that in Example 1, except that the following materials and thicknesses in Example 1 were changed.

A silica-based sintered body was used as the material of the first heat-insulating blocks 41a, and thickness of each of the first heat-insulating blocks 41a was set at 120 mm. The silica-based sintered body of the first heat-insulating block 41a used here included a silica-based composition (SiO₂ 93 mass%), and had a bulk specific gravity of 0.85 at 110°C, a thermal conductivity of 0.48 W/(m·K) at 800°C, and a heat resistance temperature of 1550°C.

Thicknesses of the second heat-insulating block 42a and the second lightweight heat-insulating monolithic refractory 42b were set at 130 mm respectively.

Moreover, the heat-insulating block laminate was obtained as follows.

A silica-based sintered body block which was pre-molded to be a block having 297 mm of width, 600 mm of depth, and 120 mm of thickness was used as the first heat-insulating block 41a. A mold was placed on the first heat-insulating block 41a so as to form a space. An alumina-silica-based lightweight heat-insulating monolithic refractory serving as the material of the second heat-insulating block 42a is molded by vibration in the mold so as to be 130 mm thick. After the alumina-silica-based lightweight heat-insulating monolithic refractory was hardened and integrated with the first heat-insulating block 41a, the mold was removed, and the alumina-silica-based lightweight heat-insulating monolithic refractory on the first heat-insulating block 41a was dried at 110°C for 24 hours. Thus, a heat-insulating block laminate which was 297 mm wide, 600 mm deep, and 250 mm thick and in which the first heat-insulating block 41a and the second heat-insulating block 42a were integrated was obtained.

### (Example 3)

In a glass melting furnace having a crown structure shown in FIGS. 6A and 6B, the crown structure is formed to have the following sizes.
Furnace Length: approximately 9 m
Furnace Width: approximately 6 m
Crown Radius: 6 m (Furnace Interior Side Radius of Corrosion Resistant Layer 2)
Crown Angle: 60 degrees

First, by the same operation as in Example 1, silica bricks 2a are aligned and arranged in a vault shape with a thickness of 375 mm on a furnace interior face side. As a result, a corrosion resistant layer 2 is built.

Next, in the present example, a silica-based heat-insulating layer 3 including silica-based sintered body blocks 31a, a dense monolithic refractory 31b, and a lightweight heat-insulating monolithic refractory 31c is formed as an upper layer on the corrosion resistant layer 2, and further, a lightweight heat-insulating layer 4 having a two-layer structure of a first lightweight heat-insulating layer 41 and a second lightweight heat-insulating layer 42 is formed thereon. As a result, the glass melting furnace having the crown structure according to the second embodiment is formed.

As each of the silica-based sintered body blocks 31a, a silica-based sintered body shaped like a block measuring 297 mm wide by 400 mm deep by 115 mm thick is used. As the silica-based sintered body, a sintered body block including a silica-based composition (SiO₂ 93 mass%) and having a built specific gravity of 0.85 at 110°C, a thermal conductivity of 0.48 W/(m·K) at 800°C, and a heat resistance temperature of 1550°C is used.

In addition, as each of first heat-insulating blocks 41a, a silica-based sintered body shaped like a block measuring 297 mm wide by 400 mm deep by 115 mm thick is used. The silica-based sintered body is a silica body block including a silica-based composition (SiO₂ 93 mass%) and having a bulk specific gravity of 0.52 at 110°C, a thermal conductivity of 0.34 W/(m·K) at 800°C, and a heat resistance temperature of 1500°C.

First, each of the first heat-insulating blocks 41a is laminated on each of the silica-based sintered body blocks 31a to be bonded and integrated with each other by silica mortar.

Next, a mold measuring 297 mm wide by 400 mm deep by 130 mm high is placed on the first heat-insulating block 41a to form a space so that a second heat-insulating block 42a can be 130 mm thick. The same alumina-silica-based lightweight heat-insulating monolithic refractory as Example 1 for forming the second heat-insulating block 42a is kneaded with water at normal temperature, and then poured into the mold, molded by vibration, and hardened. Then, the mold is removed, and the alumina-silica-based lightweight heat-insulating monolithic refractory on the first heat-insulating block 41a is dried at 110°C for 24 hours. Thus, a heat-insulating block laminate in which the silica-based sintered body block 31a, the first heat-insulating block 41a, and the second heat-insulating block 42a are integrally laminated is obtained. This heat-insulating block laminate is a heat-insulating block laminate measuring 297 mm wide by 400 mm deep by 360 mm thick. Here, the second heat-insulating block 42a is made of the same alumina-silica-based lightweight heat-insulating monolithic refractory as Example 1.

In a room temperature condition, 19 pieces in the longitudinal direction and 19 pieces in the circumferential direction of the obtained heat-insulating block laminates (each measuring 297 mm wide by 400 mm deep by 360 mm thick) are aligned and arranged respectively with a gap (joint) of about 75 mm formed between adjacent ones of the heat-insulating block laminates, so that the silica-based sintered body blocks 31a make contact with outer surfaces of the silica bricks 2a.

Here, silica-based mortar is laid in powder form in advance in steps or gaps of the outer surfaces of the silica bricks 2a and constructed to be smooth. In addition, the outer surfaces of the silica bricks 2a are assembled to show an approximately circular arc. Accordingly, when each of the heat-insulating block laminates whose bottom is shaped like a flat face is placed on each of the silica bricks 2a, gaps are formed on opposite sides. Therefore, due to the silica-based mortar also laid in powder form to be filled in the gaps, the heat-insulating block laminates are placed without causing looseness.

Further, in the circumferential direction of the silica bricks 2a in the vault shape, the heat-insulating block laminates are stacked from a lower side toward an upper side while a wooden spacer block whose width corresponds to the joint width is interposed between the blocks. The heat-insulating block laminates in a lowermost part are supported by a furnace exterior structure. Incidentally, the spacer block is removed before heating.

Next, the gaps between the heat-insulating block laminates are filled by the following operation so that the silica-based heat-insulating layer 3 and the lightweight heat-insulating layer 4 are formed. Incidentally, the materials used here are as follows.

As the dense monolithic refractory 31b, a monolithic refractory including a silica-based composition (SiO₂ 99.5 mass%), and having a bulk specific gravity of 1.82 at 110°C and a heat resistance temperature of 1620°C is used. As the lightweight heat-insulating monolithic refractory 31c, the same one as the first lightweight heat-insulating monolithic refractory 41b was used.

As the first lightweight heat-insulating monolithic refractory 41b, a lightweight heat-insulating monolithic refractory including an alumina-zirconia-based composition (Al₂O₃ 83 mass%, ZrO₂ 6 mass%), and having a bulk specific gravity of 1.25 at 110°C, a thermal conductivity of 0.73 W/(m·k) at 1000°C, and a heat resistance temperature of 1600°C is used.

As the second lightweight heat-insulating monolithic refractory 42b, a lightweight heat-insulating monolithic refractory including an alumina-silica-based composition (Al₂O₃ 34 mass%, SiO₂ 45 mass%), and having a bulk specific gravity of 0.39 at 110°C, a thermal conductivity of 0.28 W/(m·K) at 1000°C, and a heat resistance temperature of 1150°C is used.

First, at room temperature, construction at joint portions (joint portions shown in FIG. 6A) in the circumferential direction is performed as follows. The dense monolithic refractory 31b is constructed in the gaps between the heat-insulating block laminates in the circumferential direction by troweling to be 40 mm high, and then hardened. The first lightweight heat-insulating monolithic refractory 41b is constructed on the dense monolithic refractory 31b by troweling to be 190 mm high including the configuration of the lightweight heat-insulating monolithic refractory 31c, and then hardened. Further, the second lightweight heat-insulating monolithic refractory 42b is constructed on the first lightweight heat-insulating monolithic refractory 41b by troweling to be 130 mm high, and then hardened.

Incidentally, only the second lightweight heat-insulating monolithic refractory 42b is constructed by troweling for every two heat-insulating block laminates. Here, construction at portions where the second lightweight heat-insulating monolithic refractory 42b was unconstructed by cold construction is constructed after heating of the furnace.

Incidentally, portions which were not insulated from heat, such as the gaps (the joint portions shown in FIG. 6B) between the heat-insulating block laminates in the longitudinal direction are protected by heat-insulating fiber or the like during the heating. In such a state, the furnace interior temperature heated to 1550°C to thermally expand and displace the silica bricks 2a in the corrosion resistant layer 2 and perform hot construction thereon.

Specifically, the dense monolithic refractory 31b is constructed in the gaps between the heat-insulating block laminates in the longitudinal direction by troweling to be 40 mm high, and then hardened. The first lightweight heat-insulating monolithic refractory 41b is constructed on the dense monolithic refractory 31b by troweling to be 190 mm high, and then hardened. Further, the second lightweight heat-insulating monolithic refractory 42b is constructed on the first lightweight heat-insulating monolithic refractory 41b by troweling to be 130 mm high, and then hardened.

Incidentally, as described above, the second lightweight heat-insulating monolithic refractory 42b is constructed for every other joint portion in the circumferential direction in a room temperature condition. The rest joint portions which were unconstructed in the circumferential direction are also constructed by the second lightweight heat-insulating monolithic refractory 42b in the hot construction thereof.

Further, three heat-insulating block laminates which include the heat-insulating block at a furnace uppermost part and adjacent ones thereto are placed after the heating of the furnace. The blocks are constructed without interposition of any joint. In a manner similar to or the same as the aforementioned description, construction by troweling is performed on the gaps between the heat-insulating block laminates only on opposite sides so as to form the dense monolithic refractory 31b to be 40 mm high, the first lightweight heat-insulating monolithic refractory 41b to be 190 mm high, and the second lightweight heat-insulating monolithic refractory 42b to be 130 mm high.

Thus, the silica-based heat-insulating layer 3 and the lightweight heat-insulating layer 4 which have total thickness of 360 mm form a laminate structure on an upper portion of the corrosion resistant layer 2. Further, a calcium silicate board having 50 mm of thickness is constructed to be stuck to an upper portion of the lightweight heat insulating layer 4 with mortar. Here, as the calcium silicate board, a calcium silicate board including calcium silicate as a main component and having a bulk specific gravity of 0.15 at 110°C and a thermal conductivity of 0.11 W/(m·K) at 600°C is used.

Thus, the glass melting furnace having the crown structure in the present embodiment can be manufactured. The obtained glass melting furnace has a ceiling structure excellent in heat resistance and heat insulation. In addition, gas leak can be also effectively prevented. Further, the lightweight heat-insulating layer 4 is a lightweight heat-insulating layer in which the heat-insulating blocks are integrally formed through the monolithic refractories, and which do not have any gap or crack even in a high temperature condition.

### (Example 4)

A crown structure in which ceramic fiber was used in a lightweight heat-insulating layer was produced as a background-art crown structure as follows.

Two layers of silica heat-insulating bricks (SiO₂ 92 mass%) each of which was 65 mm thick and had a heat resistance temperature of 1550°C and a bulk specific gravity of 1.07 at 110°C were laminated on 375 mm-thick silica bricks to thereby form a heat-insulating layer with a thickness of 130 mm. JIS-B5 bricks having a heat resistance temperature of 1300°C were laminated thereon to be 65 mm thick, and a ceramic fiber blanket having a heat resistance temperature of 1260°C was laminated thereon to be 75 mm thick in this order. Thus, a glass melting furnace having the crown structure with a total thickness of 645 mm was formed.

### [Characteristics Evaluation]

In each of the glass melting furnaces obtained in Examples 1 to 4, heat-insulating performances (dissipation heat quantity and furnace exterior surface temperature) of the crown structure were obtained by one-dimensional steady heat calculation. Here, the furnace interior temperature and the furnace exterior temperature were 1550°C and 30°C respectively, and emissivity at surface of outside air side was obtained as 0.94. Results are shown in Table 1.

**Table 1**

| Example No. | Total Thickness (mm) | Dissipation Heat Quantity (W/m²) | Furnace Exterior Surface Temperature (°C) | Crown Weight (kg/m²) |
|---|---|---|---|---|
| 1 | 769 | 900 | 84 | 990 |
| 2 | 789 | 892 | 84 | 986 |
| 3 | 785 | 786 | 79 | 921 |
| 4 | 645 | 1193 | 98 | 893 |

In comparison with Example 4 of the background-art structure, each of Examples 1 to 3 of the embodiments of the present invention has a slight increase in the thickness and the weight, but can significantly reduce the dissipation heat quantity and the surface temperature to significantly reduce energy cost so as to contribute to energy saving.

Further, as a result of operation of Example 1 and Example 4 for one year, the furnace exterior surface temperature hardly changed in Example 1 of the present embodiment, whereas the furnace exterior surface temperature increased to 40°C or higher in Example 4 of the background art, thereby resulting in a great increase of the dissipation heat quantity by 30% or more.

Further, in Example 4, the ceramic fiber blanket was used. This is refractory ceramic fiber. The refractory ceramic fiber is a substance suspected to cause cancer. Further, problems of a decrease in heat insulation due to crystallization during medium- to long-term use, and further a decrease in energy saving have been known. An increase in the furnace exterior surface temperature in Example 4 was caused by such crystallization of the refractory ceramic fiber, which result was consistent with the publicly known knowledge.

On the other hand, in each of Examples 1 to 3, the crown structure was composed of the dense monolithic refractory, and bulk-based materials (materials not containing fiber) such as the lightweight heat-insulating monolithic refractory and the silica-based sintered bodies. The crown structure is not only safe but also can maintain high energy saving for a long period of time without causing deterioration of heat insulation over time even in long-term use under high temperature.

From the above results, the crown structure according to any of the embodiments of the present invention can provide a crown structure which provides excellent energy saving without decreasing heat insulation during medium- to long- term use, which is extremely easily constructed, and which can be used for a long period of time without causing deterioration of the silica bricks or deterioration of the joint portions. Further, the crown structure according to the present embodiments is a crown structure which is suitable for a high temperature operation like air combustion and also excellent in weight lightness and heat insulation while effectively preventing gas inside the furnace from leaking to the outside.

### INDUSTRIAL APPLICABILITY

The crown structure according to any of the embodiments of the present invention is suitable as an upper part structure for performing high temperature treatment, like a glass melting furnace. Further, it is not limited to the glass melting furnace, and can be also widely applied to an upper part structure of a furnace used for relatively low temperature treatment.

### REFERENCE SIGNS LIST

- 1: crown structure
- 2: corrosion resistant layer
- 2a: silica brick
- 3: silica-based heat-insulating layer
- 3a: silica heat-insulating brick
- 4: lightweight heat-insulating layer
- 31a: silica-based sintered body block
- 31b: dense monolithic refractory
- 31c: lightweight heat-insulating monolithic refractory
- 41: first lightweight heat-insulating layer
- 41a: first heat-insulating block
- 41b: first lightweight heat-insulating monolithic refractory
- 42: second lightweight heat-insulating layer
- 42a: second heat-insulating block
- 42b: second lightweight heat-insulating monolithic refractory

## Claims

1. A crown structure comprising:
a corrosion resistant layer comprising a plurality of silica bricks aligned and arranged in a vault shape on a furnace interior side of a glass melting furnace;
a silica-based heat-insulating layer which comprises a silica-based sintered body and which is formed on the corrosion resistant layer; and
a lightweight heat-insulating layer which is formed on the silica-based heat-insulating layer and which is constituted by a layer structure of two or more layers;
wherein in the lightweight heat-insulating layer, at least one of the layers making contact with the silica-based heat-insulating layer has a layer structure including a plurality of heat-insulating blocks, and a lightweight heat-insulating monolithic refractory provided in joint portions between the heat-insulating blocks.

2. The crown structure according to Claim 1, wherein
the silica-based sintered body is a silica heat-insulating brick; and
the silica-based heat-insulating layer comprises a plurality of the silica heat-insulating bricks aligned and arranged in a vault shape.

3. The crown structure according to Claim 1, wherein
the silica-based sintered body is a silica-based sintered body block which has a width larger than a width of the silica brick and a length larger than a length of the silica brick in a circumferential direction and a longitudinal direction of the crown structure; and
wherein the silica-based heat-insulating layer includes: a plurality of the silica-based sintered body blocks; and a dense monolithic refractory, or the dense monolithic refractory with a lightweight heat-insulating monolithic refractory formed on the dense monolithic refractory, provided in joint portions between the silica-based sintered body blocks.

4. The crown structure according to Claim 3, wherein
the silica-based sintered body block has a bulk specific gravity of 1.25 or less, and the dense monolithic refractory is a silica-based dense monolithic refractory.

5. The crown structure according to any one of Claims 1 to 4, wherein
the lightweight heat-insulating layer is constituted by two layers including a first lightweight heat-insulating layer on the furnace interior side of the glass melting furnace and a second lightweight heat-insulating layer on a furnace exterior side of the glass melting furnace;
wherein the first lightweight heat-insulating layer includes
first heat-insulating blocks, each of which is a molded body of a lightweight heat-insulating monolithic refractory or a sintered body, comprising an alumina-zirconia-based composition, an alumina-based composition, a zirconia-based composition, an alumina-zirconia-silica-based composition, an alumina-silica-based composition, a mullite-based composition, a silica-based composition, an alumina-zircon-based composition, a zircon-based composition, a chamotte-based composition, a chamotte-zircon-based composition, or a molten silica-based composition, so that the molded body of the lightweight heat-insulating monolithic refractory has a bulk specific gravity of 1.2 or less at 110°C or the sintered body has a bulk specific gravity of 1.25 or less at 110°C, and
a first lightweight heat-insulating monolithic refractory comprising an alumina-zirconia-based composition, an alumina-based composition, a zirconia-based composition, an alumina-zirconia-silica-based composition, an alumina-silica-based composition, a mullite-based composition, a silica-based composition, an alumina-zircon-based composition, a zircon-based composition, a chamotte-based composition, a chamotte-zircon-based composition, or a molten silica-based composition to have a bulk specific gravity of 1.3 or less at 110°C; and
wherein the second lightweight heat-insulating layer includes
second heat-insulating blocks each of which is a molded body of a lightweight heat-insulating monolithic refractory, comprising an alumina-based composition, an alumina-silica-based composition, a mullite-based composition, a silica-based composition, a chamotte-based composition or a chamotte-zircon-based composition to have a bulk specific gravity of 0.65 or less at 110°C, and
a second lightweight heat-insulating monolithic refractory comprising an alumina-based composition, an alumina-silica-based composition, a mullite-based composition, a silica-based composition, a chamotte-based composition, or a chamotte-zircon-based composition to have has a bulk specific gravity of 0.65 or less at 110°C.

6. The crown structure according to any one of Claims 1 to 4, wherein
the lightweight heat-insulating layer is constituted by two layers including a first lightweight heat-insulating layer on the furnace interior side of the glass melting furnace and a second lightweight heat-insulating layer on a furnace exterior side of the glass melting furnace;
wherein the first lightweight heat-insulating layer includes
first heat-insulating blocks, each of which is a molded body of a lightweight heat-insulating monolithic refractory or a sintered body, comprising an alumina-zirconia-based composition, an alumina-based composition, a zirconia-based composition, an alumina-zirconia-silica-based composition, an alumina-silica-based composition, a mullite-based composition, a silica-based composition, an alumina-zircon-based composition, a zircon-based composition, a chamotte-based composition, a chamotte-zircon-based composition, or a molten silica-based composition, so that the molded body of the lightweight heat-insulating monolithic refractory has a bulk specific gravity of 1.2 or less at 110°C or the sintered body has a bulk specific gravity of 1.25 or less at 110°C, and
a first lightweight heat-insulating monolithic refractory comprising an alumina-zirconia-based composition, an alumina-based composition, a zirconia-based composition, an alumina-zirconia-silica-based composition, an alumina-silica-based composition, a mullite-based composition, a silica-based composition, an alumina-zircon-based composition, a zircon-based composition, a chamotte-based composition, a chamotte-zircon-based composition, or a molten silica-based composition to have a bulk specific gravity of 1.3 or less at 110°C; and
wherein the second lightweight heat-insulating layer includes a second lightweight heat-insulating monolithic refractory comprising an alumina-based composition, an alumina-silica-based composition, a mullite-based composition, a silica-based composition, a chamotte-based composition, or a chamotte-zircon-based composition to have a bulk specific gravity of 0.65 or less at 110°C.

7. The crown structure according to Claim 5 or 6, wherein:
the first heat-insulating blocks of the first lightweight heat-insulating layer are aligned and arranged so that some or all of the first heat-insulating blocks are positioned adjacently to each other without interposition of the first lightweight heat-insulating monolithic refractory in a circumferential direction of the crown structure.

8. The crown structure according to any one of Claims 5 to 7, wherein the first heat-insulating blocks of the first lightweight heat-insulating layer are aligned and arranged so that some of the first heat-insulating blocks are positioned adjacently to each other without interposition of the first lightweight heat-insulating monolithic refractory in a longitudinal direction of the crown structure.

9. The crown structure according to any one of Claims 1 to 8, comprising a heat-insulating board provided on the lightweight heat-insulating layer.

10. A method for manufacturing a crown structure, comprising aligning and arranging a plurality of silica bricks in a vault shape on a furnace interior side of a glass melting furnace so as to form a corrosion resistant layer;
forming a silica-based heat-insulating layer, which includes a silica-based sintered body, on the corrosion resistant layer; and
forming a lightweight heat-insulating layer, which is constituted by two or more layers, on the silica-based heat-insulating layer
wherein in the lightweight heat-insulating layer, at least one of the layers making contact with the silica-based heat-insulating layer has a layer structure including a plurality of heat-insulating blocks, and a lightweight heat-insulating monolithic refractory provided in joint portions between the heat-insulating blocks.

11. The method for manufacturing a crown structure according to Claim 10, wherein:
in the formation of the lightweight heat-insulating layer,
first, a first lightweight heat-insulating layer, which includes a plurality of first heat-insulating blocks and a first lightweight heat-insulating monolithic refractory provided in joint portions between the first heat-insulating blocks, is formed on the silica-based heat-insulating layer; and
then, a second lightweight heat-insulating layer, which includes a plurality of second heat-insulating blocks and a second lightweight heat-insulating monolithic refractory provided in joint portions between the second heat-insulating blocks, is formed on the first lightweight heat-insulating layer.

12. The method for manufacturing a crown structure according to Claim 11, wherein:
after the first heat-insulating blocks and the second heat-insulating blocks are integrally laminated to be formed into heat-insulating block laminates in advance, and the heat-insulating block laminates are aligned and arranged on the silica-based heat-insulating layer,
the first lightweight heat-insulating monolithic refractory is constructed in the joint portions between the first heat-insulating blocks so that the first lightweight heat-insulating layer is formed, and
the second lightweight heat-insulating monolithic refractory is constructed in the joint portions between the second heat-insulating blocks so that the second lightweight heat-insulating layer is formed.

13. The method for manufacturing a crown structure according to Claim 12, wherein:
when the lightweight heat-insulating layer is formed with the heat-insulating block laminates, the first heat-insulating blocks of the heat-insulating block laminates are aligned and arranged so that some or all of the first heat-insulating blocks are positioned adjacently to each other without interposition of the first lightweight heat-insulating monolithic refractory in a circumferential direction of the crown structure;
when the joint portions are provided between the first heat-insulating blocks, the first lightweight heat-insulating monolithic refractory is constructed in the joint portions in a cold condition and/or a hot condition; and
the second lightweight heat-insulating monolithic refractory is constructed in the joint portions between the second heat-insulating blocks in a cold condition and/or a hot condition.

14. The method for manufacturing a crown structure according to Claim 12 or 13, wherein:
when the lightweight heat-insulating layer is formed with the heat-insulating block laminates, the first heat-insulating blocks of the heat-insulating block laminates are aligned and arranged so that some of the first heat-insulating blocks are positioned adjacently to each other without interposition of the first lightweight heat-insulating monolithic refractory in a longitudinal direction of the crown structure;
the first lightweight heat-insulating monolithic refractory is constructed in the joint portions between the first heat-insulating blocks in a hot condition; and
the second lightweight heat-insulating monolithic refractory is constructed in the joint portions between the second heat-insulating blocks in a cold condition and/or a hot condition.

15. The method for manufacturing a crown structure according to any one of Claims 10 to 14, comprising executing construction to stick a heat-insulating board on the lightweight heat-insulating layer so as to integrate the lightweight heat-insulating layer and the heat-insulating board with each other.

## Patentansprüche

1. Kronenstruktur, umfassend:
eine korrosionsbeständige Schicht, umfassend eine Mehrzahl von Bausteinen aus Siliziumdioxid, ausgerichtet und angeordnet in Form eines Gewölbes auf einer Ofeninnenseite eines Glasschmelzofens;
eine wärmeisolierende Schicht auf Basis von Siliziumdioxid, welche einen Sinterkörper auf Basis von Siliziumdioxid umfasst und welche auf der korrosionsbeständigen Schicht gebildet ist; und
eine wärmeisolierende Schicht geringen Gewichts, welche auf der wärmeisolierenden Schicht auf Basis von Siliziumdioxid gebildet ist und welche aus einer Schichtstruktur von zwei oder mehr Schichten aufgebaut ist;
wobei in der wärmeisolierenden Schicht geringen Gewichts mindestens eine der Schichten, die in Kontakt mit der wärmeisolierenden Schicht auf Basis von Siliziumdioxid steht, eine Schichtstruktur, einschließend eine Mehrzahl von wärmeisolierenden Blöcken und ein wärmeisolierendes monolithisches Feuerfestmaterial geringen Gewichts, vorgesehen in Verbindungsabschnitten zwischen den wärmeisolierenden Blöcken, aufweist.

2. Kronenstruktur nach Anspruch 1, wobei
der Sinterkörper auf Basis von Siliziumdioxid ein wärmeisolierender Baustein aus Siliziumdioxid ist; und
die wärmeisolierende Schicht auf Basis von Siliziumdioxid eine Mehrzahl der wärmeisolierenden Bausteine aus Siliziumdioxid, ausgerichtet und angeordnet in Form eines Gewölbes, umfasst.

3. Kronenstruktur nach Anspruch 1, wobei
der Sinterkörper auf Basis von Siliziumdioxid ein Sinterkörperblock auf Basis von Siliziumdioxid ist, welcher eine Breite, die größer ist als eine Breite des Bausteins aus Siliziumdioxid, und eine Länge, die größer ist als eine Länge des Bausteins aus Siliziumdioxid, in einer Umfangsrichtung und einer Längsrichtung der Kronenstruktur aufweist; und
wobei die wärmeisolierende Schicht auf Basis von Siliziumdioxid einschließt: eine Mehrzahl der Sinterkörperblöcke auf Basis von Siliziumdioxid; und ein dichtes monolithisches Feuerfestmaterial oder das dichte monolithische Feuerfestmaterial mit einem wärmeisolierenden monolithischen Feuerfestmaterial geringen Gewichts, gebildet auf dem dichten monolithischen Feuerfestmaterial, vorgesehen in Verbindungsabschnitten zwischen den Sinterkörperblöcken auf Basis von Siliziumdioxid.

4. Kronenstruktur nach Anspruch 3, wobei
der Sinterkörperblock auf Basis von Siliziumdioxid ein spezifisches Schüttgewicht von 1,25 oder weniger aufweist und das dichte monolithische Feuerfestmaterial ein dichtes monolithisches Feuerfestmaterial auf Basis von Siliziumdioxid ist.

5. Kronenstruktur nach einem der Ansprüche 1 bis 4, wobei
die wärmeisolierende Schicht geringen Gewichts aus zwei Schichten, einschließend eine erste wärmeisolierende Schicht geringen Gewichts auf der Ofeninnenseite des Glasschmelzofens und eine zweite wärmeisolierende Schicht geringen Gewichts auf einer Ofenaußenseite des Glasschmelzofens, aufgebaut ist;
wobei die erste wärmeisolierende Schicht geringen Gewichts einschließt
erste wärmeisolierende Blöcke, von denen jeder ein Formkörper eines wärmeisolierenden monolithischen Feuerfestmaterials geringen Gewichts oder ein Sinterkörper ist, umfassend eine Zusammensetzung auf Basis von Aluminiumoxid-Zirkoniumdioxid, eine Zusammensetzung auf Basis von Aluminiumoxid, eine Zusammensetzung auf Basis von Zirkoniumdioxid, eine Zusammensetzung auf Basis von Aluminiumoxid-Zirkoniumdioxid-Siliziumdioxid, eine Zusammensetzung auf Basis von Aluminiumoxid-Siliziumdioxid, eine Zusammensetzung auf Basis von Mullit, eine Zusammensetzung auf Basis von Siliziumdioxid, eine Zusammensetzung auf Basis von Aluminiumoxid-Zirkoniumdioxid, eine Zusammensetzung auf Basis von Zirkoniumdioxid, eine Zusammensetzung auf Basis von Schamotte, eine Zusammensetzung auf Basis von Schamotte-Zirkoniumdioxid oder eine Zusammensetzung auf Basis von geschmolzenem Siliziumdioxid, so dass der Formkörper des wärmeisolierenden monolithischen Feuerfestmaterials geringen Gewichts ein spezifisches Schüttgewicht von 1,2 oder weniger bei 110°C aufweist oder der Sinterkörper ein spezifisches Schüttgewicht von 1,25 oder weniger bei 110°C aufweist, und
ein erstes wärmeisolierendes monolithisches Feuerfestmaterial geringen Gewichts, umfassend eine Zusammensetzung auf Basis von Aluminiumoxid-Zirkoniumdioxid, eine Zusammensetzung auf Basis von Aluminiumoxid, eine Zusammensetzung auf Basis von Zirkoniumdioxid, eine Zusammensetzung auf Basis von Aluminiumoxid-Zirkoniumdioxid-Siliziumdioxid, eine Zusammensetzung auf Basis von Aluminiumoxid-Siliziumdioxid, eine Zusammensetzung auf Basis von Mullit, eine Zusammensetzung auf Basis von Siliziumdioxid, eine Zusammensetzung auf Basis von Aluminiumoxid-Zirkoniumdioxid, eine Zusammensetzung auf Basis von Zirkoniumdioxid, eine Zusammensetzung auf Basis von Schamotte, eine Zusammensetzung auf Basis von Schamotte-Zirkoniumdioxid oder eine Zusammensetzung auf Basis von geschmolzenem Siliziumdioxid, so dass dieses ein spezifisches Schüttgewicht von 1,3 oder weniger bei 110°C aufweist; und
wobei die zweite wärmeisolierende Schicht geringen Gewichts einschließt zweite wärmeisolierende Blöcke, von denen jeder ein Formkörper eines wärmeisolierenden monolithischen Feuerfestmaterials geringen Gewichts ist, umfassend eine Zusammensetzung auf Basis von Aluminiumoxid, eine Zusammensetzung auf Basis von Aluminiumoxid-Siliziumdioxid, eine Zusammensetzung auf Basis von Mullit, eine Zusammensetzung auf Basis von Siliziumdioxid, eine Zusammensetzung auf Basis von Schamotte oder eine Zusammensetzung auf Basis von Schamotte-Zirkoniumdioxid, so dass dieses ein spezifisches Schüttgewicht von 0,65 oder weniger bei 110°C aufweist, und
ein zweites wärmeisolierendes monolithisches Feuerfestmaterial geringen Gewichts, umfassend eine Zusammensetzung auf Basis von Aluminiumoxid, eine Zusammensetzung auf Basis von Aluminiumoxid-Siliziumdioxid, eine Zusammensetzung auf Basis von Mullit, eine Zusammensetzung auf Basis von Siliziumdioxid, eine Zusammensetzung auf Basis von Schamotte oder eine Zusammensetzung auf Basis von Schamotte-Zirkoniumdioxid, so dass es ein spezifisches Schüttgewicht von 0,65 oder weniger bei 110°C aufweist.

6. Kronenstruktur nach einem der Ansprüche 1 bis 4, wobei
die wärmeisolierende Schicht geringen Gewichts aus zwei Schichten, einschließend eine erste wärmeisolierende Schicht geringen Gewichts auf der Ofeninnenseite des Glasschmelzofens und eine zweite wärmeisolierende Schicht geringen Gewichts auf einer Ofenaußenseite des Glasschmelzofens, aufgebaut ist;
wobei die erste wärmeisolierende Schicht geringen Gewichts einschließt
erste wärmeisolierende Blöcke, von denen jeder ein Formkörper eines wärmeisolierenden monolithischen Feuerfestmaterials geringen Gewichts oder ein Sinterkörper ist, umfassend eine Zusammensetzung auf Basis von Aluminiumoxid-Zirkoniumdioxid, eine Zusammensetzung auf Basis von Aluminiumoxid, eine Zusammensetzung auf Basis von Zirkoniumdioxid, eine Zusammensetzung auf Basis von Aluminiumoxid-Zirkoniumdioxid-Siliziumdioxid, eine Zusammensetzung auf Basis von Aluminiumoxid-Siliziumdioxid, eine Zusammensetzung auf Basis von Mullit, eine Zusammensetzung auf Basis von Siliziumdioxid, eine Zusammensetzung auf Basis von Aluminiumoxid-Zirkoniumdioxid, eine Zusammensetzung auf Basis von Zirkoniumdioxid, eine Zusammensetzung auf Basis von Schamotte, eine Zusammensetzung auf Basis von Schamotte-Zirkoniumdioxid oder eine Zusammensetzung auf Basis von geschmolzenem Siliziumdioxid, so dass der Formkörper des wärmeisolierenden monolithischen Feuerfestmaterials geringen Gewichts ein spezifisches Schüttgewicht von 1,2 oder weniger bei 110°C aufweist oder der Sinterkörper ein spezifisches Schüttgewicht von 1,25 oder weniger bei 110°C aufweist, und
ein erstes wärmeisolierendes monolithisches Feuerfestmaterial geringen Gewichts, umfassend eine Zusammensetzung auf Basis von Aluminiumoxid-Zirkoniumdioxid, eine Zusammensetzung auf Basis von Aluminiumoxid, eine Zusammensetzung auf Basis von Zirkoniumdioxid, eine Zusammensetzung auf Basis von Aluminiumoxid-Zirkoniumdioxid-Siliziumdioxid, eine Zusammensetzung auf Basis von Aluminiumoxid-Siliziumdioxid, eine Zusammensetzung auf Basis von Mullit, eine Zusammensetzung auf Basis von Siliziumdioxid, eine Zusammensetzung auf Basis von Aluminiumoxid-Zirkoniumdioxid, eine Zusammensetzung auf Basis von Zirkoniumdioxid, eine Zusammensetzung auf Basis von Schamotte, eine Zusammensetzung auf Basis von Schamotte-Zirkoniumdioxid oder eine Zusammensetzung auf Basis von geschmolzenem Siliziumdioxid, so dass es ein spezifisches Schüttgewicht von 1,3 oder weniger bei 110°C aufweist; und
wobei die zweite wärmeisolierende Schicht geringen Gewichts einschließt
ein zweites wärmeisolierendes monolithisches Feuerfestmaterial geringen Gewichts, umfassend eine Zusammensetzung auf Basis von Aluminiumoxid, eine Zusammensetzung auf Basis von Aluminiumoxid-Siliziumdioxid, eine Zusammensetzung auf Basis von Mullit, eine Zusammensetzung auf Basis von Siliziumdioxid, eine Zusammensetzung auf Basis von Schamotte oder eine Zusammensetzung auf Basis von Schamotte-Zirkoniumdioxid, so dass es ein spezifisches Schüttgewicht von 0,65 oder weniger bei 110°C aufweist.

7. Kronenstruktur nach Anspruch 5 oder 6, wobei:
die ersten wärmeisolierenden Blöcke der ersten wärmeisolierenden Schicht geringen Gewichts ausgerichtet und angeordnet sind, so dass einige oder alle der ersten wärmeisolierenden Blöcke ohne Einfügung des ersten wärmeisolierenden monolithischen Feuerfestmaterials geringen Gewichts in einer Umfangsrichtung der Kronenstruktur nebeneinander positioniert sind.

8. Kronenstruktur nach einem der Ansprüche 5 bis 7, wobei die ersten wärmeisolierenden Blöcke der ersten wärmeisolierenden Schicht geringen Gewichts ausgerichtet und angeordnet sind, so dass einige der ersten wärmeisolierenden Blöcke ohne Einfügung des ersten wärmeisolierenden monolithischen Feuerfestmaterials geringen Gewichts in einer Längsrichtung der Kronenstruktur nebeneinander positioniert sind.

9. Kronenstruktur nach einem der Ansprüche 1 bis 8, umfassend eine wärmeisolierende Platte, vorgesehen auf der wärmeisolierenden Schicht geringen Gewichts.

10. Verfahren zur Herstellung einer Kronenstruktur, umfassend das Ausrichten und Anordnen einer Mehrzahl von Bausteinen aus Siliziumdioxid in Form eines Gewölbes auf einer Ofeninnenseite eines Glasschmelzofens, um so eine korrosionsbeständige Schicht zu bilden;
das Bilden einer wärmeisolierenden Schicht auf Basis von Siliziumdioxid, welche einen Sinterkörper auf Basis von Siliziumdioxid einschließt, auf der korrosionsbeständigen Schicht; und
das Bilden einer wärmeisolierenden Schicht geringen Gewichts, welche aus zwei oder mehr Schichten aufgebaut ist, auf der wärmeisolierenden Schicht auf Basis von Siliziumdioxid,
wobei in der wärmeisolierenden Schicht geringen Gewichts mindestens eine der Schichten, die in Kontakt mit der wärmeisolierenden Schicht auf Basis von Siliziumdioxid steht, eine Schichtstruktur, einschließend eine Mehrzahl von wärmeisolierenden Blöcken und ein wärmeisolierendes monolithisches Feuerfestmaterial geringen Gewichts, vorgesehen in Verbindungsabschnitten zwischen den wärmeisolierenden Blöcken, aufweist.

11. Verfahren zur Herstellung einer Kronenstruktur nach Anspruch 10, wobei:
in der Bildung der wärmeisolierenden Schicht geringen Gewichts
zuerst eine erste wärmeisolierende Schicht geringen Gewichts, welche eine Mehrzahl von ersten wärmeisolierenden Blöcken und ein erstes wärmeisolierendes monolithisches Feuerfestmaterial geringen Gewichts, vorgesehen in Verbindungsabschnitten zwischen den ersten wärmeisolierenden Blöcken, einschließt, auf der wärmeisolierenden Schicht auf Basis von Siliziumdioxid gebildet wird; und
sodann eine zweite wärmeisolierende Schicht geringen Gewichts, welche eine Mehrzahl von zweiten wärmeisolierenden Blöcken und ein zweites wärmeisolierendes monolithisches Feuerfestmaterial geringen Gewichts, vorgesehen in Verbindungsabschnitten zwischen den zweiten wärmeisolierenden Blöcken, einschließt, auf der ersten wärmeisolierenden Schicht geringen Gewichts gebildet wird.

12. Verfahren zur Herstellung einer Kronenstruktur nach Anspruch 11, wobei:
nachdem die ersten wärmeisolierenden Blöcke und die zweiten wärmeisolierenden Blöcke als Verbund laminiert worden sind, um vorab in wärmeisolierende Blocklaminate geformt zu werden, und die wärmeisolierenden Blocklaminate auf der wärmeisolierenden Schicht auf Basis von Siliziumdioxid ausgerichtet und angeordnet worden sind,
das erste wärmeisolierende monolithische Feuerfestmaterial geringen Gewichts in den Verbindungsabschnitten zwischen den ersten wärmeisolierenden Blöcken errichtet wird, so dass die erste wärmeisolierende Schicht geringen Gewichts gebildet wird, und
das zweite wärmeisolierende monolithische Feuerfestmaterial geringen Gewichts in den Verbindungsabschnitten zwischen den zweiten wärmeisolierenden Blöcken errichtet wird, so dass die zweite wärmeisolierende Schicht geringen Gewichts gebildet wird.

13. Verfahren zur Herstellung einer Kronenstruktur nach Anspruch 12, wobei:
wenn die wärmeisolierende Schicht geringen Gewichts mit den wärmeisolierenden Blocklaminaten gebildet wird, die ersten wärmeisolierenden Blöcke der wärmeisolierenden Blocklaminate ausgerichtet und angeordnet werden, so dass einige oder alle der ersten wärmeisolierenden Blöcke ohne Einfügung des ersten wärmeisolierenden monolithischen Feuerfestmaterials geringen Gewichts in einer Umfangsrichtung der Kronenstruktur nebeneinander positioniert werden;
wenn die Verbindungsabschnitte zwischen den ersten wärmeisolierenden Blöcken vorgesehen werden, das erste wärmeisolierende monolithische Feuerfestmaterial geringen Gewichts in den Verbindungsabschnitten in einem Kaltzustand und/oder einem Heißzustand errichtet wird; und
das zweite wärmeisolierende monolithische Feuerfestmaterial geringen Gewichts in den Verbindungsabschnitten zwischen den zweiten wärmeisolierenden Blöcken in einem Kaltzustand und/oder einem Heißzustand errichtet wird.

14. Verfahren zur Herstellung einer Kronenstruktur nach Anspruch 12 oder 13, wobei:
wenn die wärmeisolierende Schicht geringen Gewichts mit den wärmeisolierenden Blocklaminaten gebildet wird, die ersten wärmeisolierenden Blöcke der wärmeisolierenden Blocklaminate ausgerichtet und angeordnet werden, so dass einige der ersten wärmeisolierenden Blöcke ohne Einfügung des ersten wärmeisolierenden monolithischen Feuerfestmaterials geringen Gewichts in einer Längsrichtung der Kronenstruktur nebeneinander positioniert werden;
das erste wärmeisolierende monolithische Feuerfestmaterial geringen Gewichts in den Verbindungsabschnitten zwischen den ersten wärmeisolierenden Blöcken in einem Heißzustand errichtet wird; und
das zweite wärmeisolierende monolithische Feuerfestmaterial geringen Gewichts in den Verbindungsabschnitten zwischen den zweiten wärmeisolierenden Blöcken in einem Kaltzustand und/oder einem Heißzustand errichtet wird.

15. Verfahren zur Herstellung einer Kronenstruktur nach einem der Ansprüche 10 bis 14, umfassend das Ausführen einer Errichtung zum Anhaften einer wärmeisolierenden Platte an die wärmeisolierende Schicht geringen Gewichts, um so die wärmeisolierende Schicht geringen Gewichts und die wärmeisolierende Platte miteinander zu verbinden.

## Revendications

1. Structure de voûte comprenant :
une couche résistant à la corrosion comprenant une pluralité de briques de silice alignées et agencées en une forme de voûte sur un côté inférieur de four d'un four de fusion de verre ;
une couche calorifuge à base de silice qui comprend un corps fritté à base de silice et qui est formée sur la couche résistant à la corrosion ; et
une couche calorifuge légère qui est formée sur la couche calorifuge à base de silice et qui est constituée d'une structure de couches de deux couches ou plus ;
dans laquelle dans la couche calorifuge légère, au moins une des couches venant en contact avec la couche calorifuge à base de silice a une structure de couches incluant une pluralité de blocs calorifuges et un réfractaire monolithique calorifuge léger prévu dans des portions de joint entre les blocs calorifuges.

2. Structure de voûte selon la revendication 1, dans laquelle
le corps fritté à base de silice est une brique de silice calorifuge ; et
la couche calorifuge à base de silice comprend une pluralité des briques de silice calorifuges alignées et agencées en une forme de voûte.

3. Structure de voûte selon la revendication 1, dans laquelle
le corps fritté à base de silice est un bloc de corps fritté à base de silice qui a une largeur supérieure à une largeur de la brique de silice et une longueur supérieure à une longueur de la brique de silice dans une direction circonférentielle et une direction longitudinale de la structure de voûte ; et
dans laquelle la couche calorifuge à base de silice inclut : une pluralité des blocs de corps fritté à base de silice ; et un réfractaire monolithique dense, ou le réfractaire monolithique dense avec un réfractaire monolithique calorifuge léger formé sur le réfractaire monolithique dense, prévu dans des portions de joint entre les blocs de corps fritté à base de silice.

4. Structure de voûte selon la revendication 3, dans laquelle
le corps fritté à base de silice a une gravité spécifique en vrac de 1,25 ou moins et le réfractaire monolithique dense est un réfractaire monolithique dense à base de silice.

5. Structure de voûte selon l'une quelconque des revendications 1 à 4, dans laquelle
la couche calorifuge légère est constituée de deux couches incluant une première couche calorifuge légère sur le côté intérieur de four du four de fusion de verre et une seconde couche calorifuge légère sur un côté extérieur de four du four de fusion de verre ;
dans laquelle la première couche calorifuge légère inclut
des premiers blocs calorifuges dont chacun est un corps moulé d'un réfractaire monolithique calorifuge léger ou un corps fritté, comprenant une composition à base d'alumine-zircone, une composition à base d'alumine, une composition à base de zircone, une composition à base d'alumine-zircone-silice, une composition à base d'alumine-silice, une composition à base de mullite, une composition à base de silice, une composition à base d'alumine-zircon, une composition à base de zircon, une composition à base de chamotte, une composition à base de chamotte-zircon ou une composition à base de silice fondue de sorte que le corps moulé du réfractaire monolithique calorifuge léger a une gravité spécifique en vrac de 1,2 ou moins à 110°C ou le corps fritté a une gravité spécifique en vrac de 1,25 ou moins à 110 °C, et
un premier réfractaire monolithique calorifuge léger comprenant une composition à base d'alumine-zircone, une composition à base d'alumine, une composition à base de zircone, une composition à base d'alumine-zircone-silice, une composition à base d'alumine-silice, une composition à base de mullite, une composition à base de silice, une composition à base d'alumine-zircon, une composition à base de zircon, une composition à base de chamotte, une composition à base de chamotte-zircon ou une composition à base de silice fondue pour avoir une gravité spécifique en vrac de 1,3 ou moins à 110°C ; et dans laquelle la seconde couche calorifuge légère inclut
des seconds blocs calorifuges dont chacun est un corps moulé d'un réfractaire monolithique calorifuge léger, comprenant une composition à base d'alumine, une composition à base d'alumine-silice, une composition à base de mullite, une composition à base de silice, une composition à base de chamotte ou une composition à base de chamotte-zircon pour avoir une gravité spécifique en vrac de 0,65 ou moins à 110°C, et
un second réfractaire monolithique calorifuge léger comprenant une composition à base d'alumine, une composition à base d'alumine-silice, une composition à base de mullite, une composition à base de silice, une composition à base de chamotte ou une composition à base de chamotte-zircon pour avoir une gravité spécifique en vrac de 0,65 ou moins à 110°C.

6. Structure de voûte selon l'une quelconque des revendications 1 à 4, dans laquelle
la couche calorifuge légère est constituée de deux couches incluant une première couche calorifuge légère sur le côté intérieur de four du four de fusion de verre et une seconde couche calorifuge légère sur un côté extérieur de four du four de fusion de verre ;
dans laquelle la première couche calorifuge légère inclut
des premiers blocs calorifuges dont chacun est un corps moulé d'un réfractaire monolithique calorifuge léger ou un corps fritté, comprenant une composition à base d'alumine-zircone, une composition à base d'alumine, une composition à base de zircone, une composition à base d'alumine-zircone-silice, une composition à base d'alumine-silice, une composition à base de mullite, une composition à base de silice, une composition à base d'alumine-zircon, une composition à base de zircon, une composition à base de chamotte, une composition à base de chamotte-zircon ou une composition à base de silice fondue de sorte que le corps moulé du réfractaire monolithique calorifuge léger a une gravité spécifique en vrac de 1,2 ou moins à 110°C ou le corps fritté a une gravité spécifique en vrac de 1,25 ou moins à 110 °C, et
un premier réfractaire monolithique calorifuge léger comprenant une composition à base d'alumine-zircone, une composition à base d'alumine, une composition à base de zircone, une composition à base d'alumine-zircone-silice, une composition à base d'alumine-silice, une composition à base de mullite, une composition à base de silice, une composition à base d'alumine-zircon, une composition à base de zircon, une composition à base de chamotte, une composition à base de chamotte-zircon ou une composition à base de silice fondue pour avoir une gravité spécifique en vrac de 1,3 ou moins à 110°C ; et dans laquelle la seconde couche calorifuge légère inclut un second réfractaire monolithique calorifuge léger comprenant une composition à base d'alumine, une composition à base d'alumine-silice, une composition à base de mullite, une composition à base de silice, une composition à base de chamotte ou une composition à base de chamotte-zircon pour avoir une gravité spécifique en vrac de 0,65 ou moins à 110°C.

7. Structure de voûte selon la revendication 5 ou 6, dans laquelle :
les premiers blocs calorifuges de la première couche calorifuge légère sont alignés et agencés de sorte que certains ou l'ensemble des premiers blocs calorifuges sont positionnés de manière adjacente l'un à l'autre sans interposition du premier réfractaire monolithique calorifuge léger dans une direction circonférentielle de la structure de voûte.

8. Structure de voûte selon l'une quelconque des revendications 5 à 7, dans laquelle les premiers blocs calorifuges de la première couche calorifuge légère sont alignés et agencés de sorte que certains des premiers blocs calorifuges sont positionnés de manière adjacente l'un à l'autre sans interposition du premier réfractaire monolithique calorifuge léger dans une direction longitudinale de la structure de voûte.

9. Structure de voûte selon l'une quelconque des revendications 1 à 8, comprenant un panneau calorifuge prévu sur la couche calorifuge légère.

10. Procédé de fabrication d'une structure de voûte, comprenant aligner et agencer une pluralité de briques de silice en une forme de voûte sur un côté inférieur de four d'un four de fusion de verre de manière à former une couche résistant à la corrosion ;
former une couche calorifuge à base de silice, qui inclut un corps fritté à base de silice, sur la couche résistant à la corrosion ; et
former une couche calorifuge légère, qui est constituée de deux couches ou plus, sur la couche calorifuge à base de silice,
dans lequel dans la couche calorifuge légère, au moins une des couches venant en contact avec la couche calorifuge à base de silice a une structure de couches incluant une pluralité de blocs calorifuges et un réfractaire monolithique calorifuge léger prévu dans des portions de joint entre les blocs calorifuges.

11. Procédé de fabrication d'une structure de voûte selon la revendication 10, dans lequel :
dans la formation de la couche calorifuge légère,
une première couche calorifuge légère, qui inclut une pluralité de premiers blocs calorifuges et un premier réfractaire monolithique calorifuge léger prévu dans des portions de joint entre les premiers blocs calorifuges, est d'abord formée sur la couche calorifuge à base de silice ; et
une seconde couche calorifuge légère, qui inclut une pluralité de seconds blocs calorifuges et un second réfractaire monolithique calorifuge léger prévu dans des portions de joint entre les seconds blocs calorifuges, est ensuite formée sur la première couche calorifuge légère.

12. Procédé de fabrication d'une structure de voûte selon la revendication 11, dans lequel :
après que les premiers blocs calorifuges et les seconds blocs calorifuges sont intégralement stratifiés pour être formés en des stratifiés de blocs calorifuges à l'avance, et les stratifiés de blocs calorifuges sont alignés et agencés sur la couche calorifuge à base de silice,
le premier réfractaire monolithique calorifuge léger est construit dans les portions de joint entre les premiers blocs calorifuges de sorte que la première couche calorifuge légère est formée, et
le second réfractaire monolithique calorifuge léger est construit dans les portions de joint entre les seconds blocs calorifuges de sorte que la seconde couche calorifuge légère est formée.

13. Procédé de fabrication d'une structure de voûte selon la revendication 12, dans lequel :
lorsque la couche calorifuge légère est formée des stratifiés de blocs calorifuges, les premiers blocs calorifuges des stratifiés de blocs calorifuges sont alignés et agencés de sorte que certains ou l'ensemble des premiers blocs calorifuges sont positionnés de manière adjacente l'un à l'autre sans interposition du premier réfractaire monolithique calorifuge léger dans une direction circonférentielle de la structure de voûte ;
lorsque les portions de joint sont prévues entre les premiers blocs calorifuges, le premier réfractaire monolithique calorifuge léger est construit dans les portions de joint dans une condition froide et/ou une condition chaude ; et
le second réfractaire monolithique calorifuge léger est construit dans les portions de joint entre les seconds blocs calorifuges dans une condition froide et/ou une condition chaude.

14. Procédé de fabrication d'une structure de voûte selon la revendication 12 ou 13, dans lequel :
lorsque la couche calorifuge légère est formée des stratifiés de blocs calorifuges, les premiers blocs calorifuges des stratifiés de blocs calorifuges sont alignés et agencés de sorte que certains des premiers blocs calorifuges sont positionnés de manière adjacente l'un à l'autre sans interposition du premier réfractaire monolithique calorifuge léger dans une direction longitudinale de la structure de voûte ;
le premier réfractaire monolithique calorifuge léger est construit dans les portions de joint entre les premiers blocs calorifuges dans une condition chaude ; et
le second réfractaire monolithique calorifuge léger est construit dans les portions de joint entre les seconds blocs calorifuges dans une condition froide et/ou une condition chaude.

15. Procédé de fabrication d'une structure de voûte selon l'une quelconque des revendications 10 à 14, comprenant l'exécution de la construction pour coller un panneau calorifuge sur la couche calorifuge légère de manière à intégrer la couche calorifuge légère et le panneau calorifuge l'un à l'autre.
